# EUROPEAN PATENT APPLICATION

(11) **EP 4 541 464 A2**
(43) Date of publication of application: **23.04.2025**
(21) Application number: 24207153.8
(22) Date of filing: 17.10.2024
(51) Int. Cl.: B05B 9/08, B05B 1/30, B05B 9/047, B05B 12/00, B05B 12/08, B05B 15/625, B05B 15/65, B05B 15/30, B05B 15/40, B05B 15/534, B05B 15/50, B05B 15/55

(54) **PAINTING SYSTEM INCLUDING ELECTRIC SPRAYER**

(30) Priority: 17.10.2023 US 202363590908 P
(71) Applicant: Techtronic Cordless GP, Anderson, SC 29621 (US)
(72) Inventor: POMEROY, Edward A., Anderson, SC 29621 (US); WATSON, Elton L., Anderson, SC 29621 (US); BESTER, Michael, Anderson, SC 29621 (US)
(74) Representative: Novagraaf Group

(57) **Abstract**

A paint sprayer (14) may include a housing (42) enclosing an internal space. A paint sprayer (14) may include a nozzle assembly (58) coupled to the housing (42). A paint sprayer (14) may include a pump assembly (82) fluidly coupled to the nozzle assembly (42) and positioned within a first region (78) of the internal space. A paint sprayer (14) may include a reservoir (86) fluidly coupled to the pump assembly (82) and configured to hold a spray liquid, the reservoir (86) being positioned within a second region (130) of the internal space.

## Description

### CROSS-REFERENCE TO RELATED APPLICATIONS

This application claims priority to U.S. Provisional Patent Application No. 63/590,908, filed October 17, 2023, the entire content of which is incorporated herein by reference.

### FIELD OF THE DISCLOSURE

The present disclosure relates to painting systems, and more specifically to portable electric paint sprayers.

### BACKGROUND OF THE DISCLOSURE

Portable electric paint sprayers, sometimes referred to as airless paint sprayers, can finely atomize liquid paint without utilizing a source of compressed air. Airless paint sprayers pressurize liquid paint or other spray liquids (e.g., stain, varnish, or the like) and discharge the paint through small shaped orifices.

### SUMMARY OF THE DISCLOSURE

The present disclosure provides, in one aspect, a paint sprayer including: a housing enclosing an internal space; a nozzle assembly coupled to the housing; a pump assembly fluidly coupled to the nozzle assembly and positioned within a first region of the internal space; and a reservoir fluidly coupled to the pump assembly and configured to hold a spray liquid, the reservoir being positioned within a second region of the internal space.

The present disclosure provides, in another aspect, a paint sprayer including: a housing; a nozzle assembly coupled to the housing; a pump assembly positioned within the housing and fluidly coupled to the nozzle assembly; and a collapsible reservoir fluidly coupled to the pump assembly and configured to hold a spray liquid, the collapsible reservoir including a flexible sidewall and defining a variable internal volume.

The present disclosure provides, in another aspect, a paint sprayer including: a housing; a nozzle assembly coupled to the housing; a pump assembly positioned within the housing and fluidly coupled to the nozzle assembly; and a collapsible reservoir fluidly coupled to the pump assembly and configured to hold a spray liquid, the collapsible reservoir including a flexible bag and a rigid coupler affixed to the flexible bag.

The present disclosure provides, in another aspect, a paint sprayer including: a housing; a nozzle assembly coupled to the housing; a pump assembly positioned within the housing and fluidly coupled to the nozzle assembly; a reservoir fluidly coupled to the pump assembly and configured to hold a spray liquid; and a transfer coupler fluidly coupled to the pump assembly and configured to selectively connect to an external source of the spray liquid; wherein the pump assembly is operable in a first mode to draw the spray liquid from the external source via the transfer coupler and fill the reservoir.

The present disclosure provides, in another aspect, a paint sprayer including: a housing; a pump assembly positioned within the housing; and a nozzle assembly fluidly coupled to the pump assembly, the nozzle assembly including a spray tip defining an outlet orifice, a valve assembly positioned upstream from the outlet orifice and downstream from the pump assembly and biased toward a closed position, and an override actuator coupled to the valve assembly; wherein the valve assembly is configured to open in response to a fluid pressure developed by the pump assembly exceeding a threshold pressure; and wherein the override actuator is operable to open the valve assembly irrespective of the fluid pressure.

The present disclosure provides, in another aspect, a paint spray system including: a paint sprayer configured to spray a spray liquid, the paint sprayer including a pump assembly, a spray tip, and a sprayer transfer coupler fluidly coupled to the pump assembly; a transfer hose including a hose segment and a hose transfer coupler, the hose segment having a first end coupled to the hose transfer coupler and a second end configured to fluidly communicate with a source of the spray liquid, the hose transfer coupler being configured to selectively and removably couple to the sprayer transfer coupler to establish a fluid connection between the pump assembly and the hose segment; and a base including a base wall and a first support portion coupled to the base wall and defining a first receptacle configured to removably receive the paint sprayer.

The present disclosure provides, in another aspect, a method of priming a paint sprayer of a paint spray system, the paint spray system including a transfer hose and a container containing a spray liquid, the transfer hose having a primary hose segment, a hose transfer connector, and a priming mechanism having a priming chamber, the method including: connecting the hose transfer connector to the paint sprayer; drawing the spray liquid from the container into the priming chamber of the priming mechanism; and forcing the spray liquid out of the priming chamber and into the paint sprayer

Other aspects of the disclosure will become apparent by consideration of the detailed description and accompanying drawings.

### BRIEF DESCRIPTION OF THE DRAWINGS

FIG. 1 is a perspective view illustrating a painting system according to an embodiment of the disclosure.
FIG. 2 is another perspective view illustrating the painting system of FIG. 1.
FIG. 3 is a perspective view illustrating portions of a transfer hose of the painting system of FIG. 1.
FIG. 4 is a perspective view illustrating a paint sprayer of the painting system of FIG. 1.
FIG. 5 is a cross-sectional view of the paint sprayer of FIG. 4, taken along line 5-5 of FIG. 4.
FIG. 6 is a perspective view illustrating a reservoir of the paint sprayer of FIG. 4.
FIG. 7 is a schematic view illustrating a control system of the paint sprayer of FIG. 4.
FIG. 8 is a schematic view illustrating a control logic for an electronic controller of the control system of FIG. 7.
FIG. 9 is a perspective view illustrating a nozzle assembly of the paint sprayer of FIG. 4.
FIG. 10 is cross-sectional view illustrating the nozzle assembly of FIG. 9, taken along line 10-10 of FIG. 9.
FIG. 11 is cross-sectional view illustrating portions of the nozzle assembly of FIG. 9, taken along line 11-11 of FIG. 9.
FIG. 12 is a cross-sectional view illustrating portions of the nozzle assembly of FIG. 9, taken along line 10-10 of FIG. 9.
FIG. 13 is a partially exploded perspective view illustrating the painting system of FIG. 1.
FIG. 14 is a perspective view illustrating a base of the painting system of FIG. 1.
FIGS. 15 and 16 are perspective views illustrating a painting system according to another embodiment of the disclosure.
FIG. 17 is a perspective view illustrating a paint sprayer of the painting system of FIG. 15.
FIG. 18 is a partially exploded perspective view illustrating the paint sprayer of FIG. 17.
FIG. 19 is a cross-sectional view of the paint sprayer of FIG. 17, taken along line 19-19 of FIG. 17.
FIG. 20 is a partially exploded perspective view of a reservoir assembly of the paint sprayer of FIG. 17.
FIG. 21 is a detailed cross-sectional view showing portions of the paint sprayer of FIG. 17, taken along line 19-19 of FIG. 17.
FIG. 22 is a detailed cross-sectional view showing portions of the paint sprayer of FIG. 17, taken along line 22-22 of FIG. 17.
FIG. 23A is a partial perspective view showing a hose transfer coupler of the painting system of FIG. 15 connected to the paint sprayer of FIG. 17.
FIG. 23B is a partial perspective view showing the hose transfer coupler of FIG. 23 A.
FIG. 23C is a partial perspective view showing a sprayer transfer connector of the paint sprayer of FIG. 17.
FIG. 24 is a cross sectional view showing the hose transfer coupler of FIG. 23A disconnected from the paint sprayer of FIG. 17, taken along line 19-19 of FIG. 17.
FIG. 25 is a cross sectional view showing the hose transfer coupler of FIG. 23A connected to the paint sprayer of FIG. 17, taken along line 19-19 of FIG. 17.
FIG. 26 is a partial plan view of the paint sprayer of FIG. 17 with portions removed.
FIG. 27 is a detailed cross-sectional view showing portions of the paint sprayer of FIG. 17, taken along line 19-19 of FIG. 17
FIG. 28 is a detailed cross-sectional view showing portions of the paint sprayer of FIG. 17, taken along line 19-19 of FIG. 17.
FIG. 29 is a partial perspective view showing the hose transfer coupler of FIG. 23A connected to the paint sprayer of FIG. 17, with portions removed.
FIG. 30 is a detailed cross-sectional view showing portions of the paint sprayer of FIG. 17, taken along line 30-30 of FIG. 17.
FIG. 31 is a partial perspective view showing portions of the paint sprayer of FIG. 17.
FIG. 32 is a partially exploded perspective view of the painting system of FIG. 15.
FIG. 33 is a perspective view of a transfer hose of the painting system of FIG. 15.
FIG. 34 is a cross-sectional view of a priming mechanism of the transfer hose of FIG. 33, taken along line 34-34 of FIG. 33.
FIG. 35 is a cross-sectional view of an end of the transfer hose of FIG. 34 disposed in a paint can.
FIG. 36 is a flow chart showing a method of priming the paint sprayer of FIG. 15 via the priming mechanism of FIG. 34.
FIGS. 37 and 38 are perspective views of the painting system of FIG. 15, showing the hose transfer coupler of FIG. 26 connected to the paint sprayer of FIG. 17.
FIGS. 39 and 40 are perspective views of a base of the painting system of FIG. 15.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

Features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

### DETAILED DESCRIPTION

### I. First Embodiment

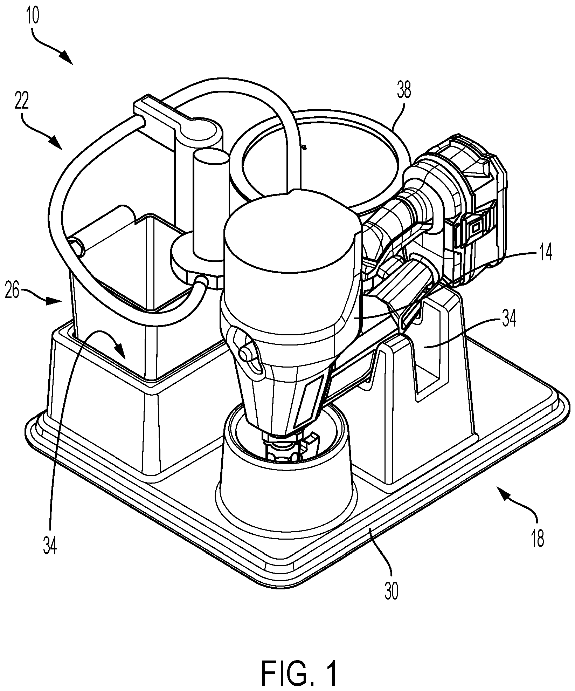

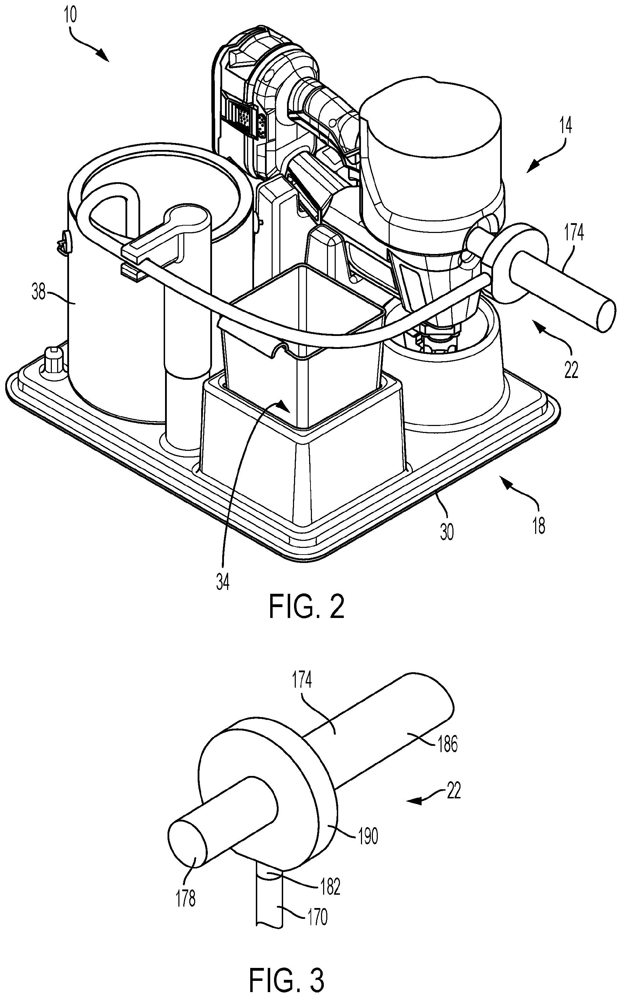

FIGS. 1 and 2 illustrate a painting system 10 including a paint sprayer 14, a base assembly 18, a transfer hose 22, and a container 26. The base assembly 18 includes a base 30 with a plurality of receptacles 34 for removably receiving and storing the paint sprayer 14, the transfer hose 22, the container 26, and a paint can 38. The transfer hose 22 selectively fluidly couples to the paint sprayer 14 to facilitate loading or unloading the paint sprayer 14 with a spray liquid (e.g., paints, stains, or cleaning solutions such as water, solvents, or the like).

### The Paint Sprayer

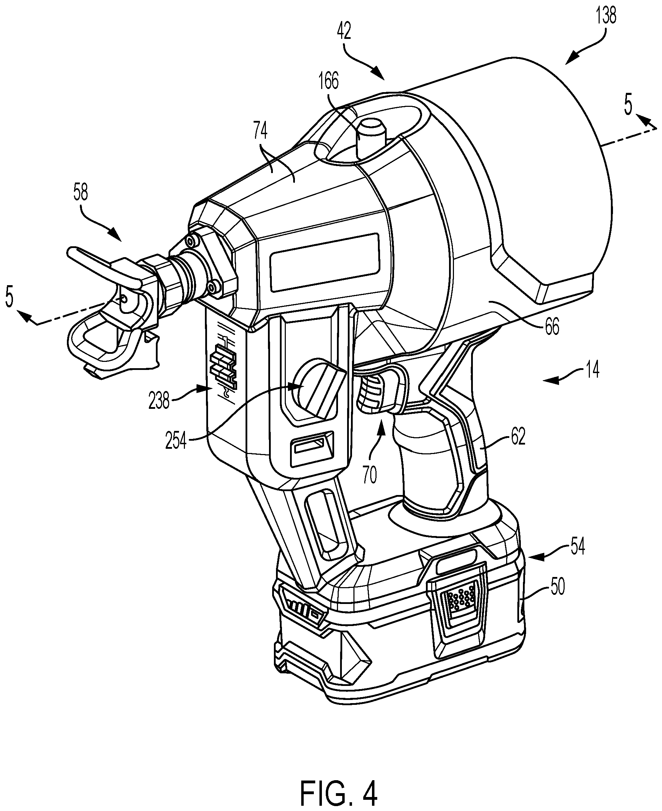

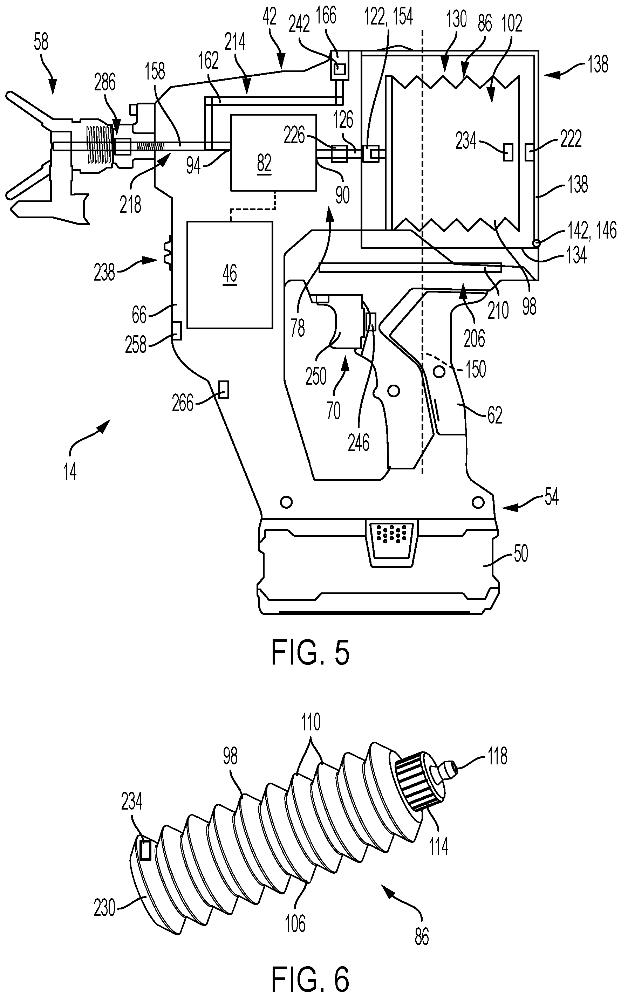

With reference to FIGS. 4 and 5, in the illustrated embodiment, the paint sprayer 14 is a portable, electric paint sprayer 14 that includes a housing 42 and an electric motor 46. The paint sprayer 14 is operable with a battery pack 50 removably coupled to a battery receptacle 54 located at a bottom end of the housing 42. The battery pack 50 includes a plurality of battery cells (not shown), which are electrically connected to provide the desired output (e.g., nominal voltage, current capacity, etc.) of the battery pack 50. The electric motor 46 receives power from the battery pack 50 when the battery pack 50 is coupled to the battery receptacle 54.

In other embodiments (not shown), the paint sprayer 14 may include a power cord for electrically connecting the motor 46 to a source of AC power. The battery pack 50 is the preferred means for powering the paint sprayer 14, however, because a cordless paint sprayer can be used in locations where other power sources are unavailable. In the present embodiment, the motor 46 includes a stator assembly (not shown) and a rotor assembly (not shown) that is rotatable with respect to the stator assembly about an axis. In some embodiments, the motor 46 can be a brushless direct current ("BLDC") motor where the stator assembly is electronically commutated.

With continued reference to FIGS. 4 and 5, the paint sprayer 14 also includes a nozzle assembly 58 coupled to the housing 42. The housing 42 includes a handle portion 62 coupled to the battery receptacle 54, and a main portion 66 coupled to the nozzle assembly 58. The handle portion 62 supports a trigger assembly 70 that is electrically connected to the motor 46 and operable to selectively activate the motor 46. In the illustrated embodiment, the housing 42 can include a pair of clamshell halves 74 coupled together along a central parting plane and forming both the handle portion 62 and the main portion 66.

The main portion 66 of the housing 42 encloses a first internal space 78 in which the motor 46 is supported. The paint sprayer 14 also includes a pump 82 operably coupled to the motor 46 and positioned within the first internal space 78 of the main portion 66. The pump 82 is fluidly connected to the nozzle assembly 58 and mechanically coupled to the motor 46. The paint sprayer 14 further includes a reservoir 86 positioned within the housing 42 and fluidly connected to the pump 82. The reservoir 86 can receive, store, and supply the spray liquid. In particular, the reservoir 86 can receive the spray liquid from the pump 82, store the spray liquid, and also supply the spray liquid to the pump 82.

In the illustrated embodiment, the pump 82 includes a first fluid connector 90 and a second fluid connector 94. The pump 82 is operable in both a forward mode and a reverse mode. In the forward mode, the pump 82 draws in the spray liquid through the first fluid connector 90 and expels the spray liquid through the second fluid connector 94. Conversely, in the reverse mode, the pump 82 draws in the spray liquid through the second fluid connector 94 and expels the spray liquid through the first fluid connector 90. The pump 82 may be operated in the forward mode by operating the motor 46 in a first, or forward, rotational direction, and may be operated in the reverse mode by operating the motor 46 in an opposite second, or reverse, rotational direction. In the illustrated embodiment, the pump 82 is a gear pump. In other embodiments, the pump 82 may instead be another type of pump, such as, e.g., a piston pump, a diaphragm pump, a peristaltic pump, or the like.

With reference to FIGS. 5 and 6, in the illustrated embodiment, the reservoir 86 is a collapsible reservoir having a collapsible portion 98 capable of expanding or contracting in response to the reservoir 86 being loaded or unloaded with the spray liquid. The reservoir 86 defines a variable internal volume 102 and expands and contracts between full and empty states. When the collapsible portion 98 expands, the variable internal volume 102 increases, and when the collapsible portion 98 contracts, the variable internal volume 102 decreases. In some embodiments, the variable internal volume 102 in the empty state of the reservoir is ninety percent or less of the variable internal volume 102 in the filled state. As shown in FIG. 6, the collapsible portion 98 can be formed as a flexible bag 98 having a sidewall 106 with a plurality of folded segments 110. As the collapsible portion 98 expands, the folded segments 110 unfold away from each other, and as the collapsible portion 98 contracts, the folded segments 110 fold toward one another. In other embodiments (not shown), the collapsible portion 98 may instead simply be formed with a flexible sidewall 106 that collapses towards itself as the reservoir 86 is emptied and expands away from itself as the reservoir 86 is filled.

The reservoir 86 can also include a rigid coupler 114 coupled to the collapsible portion 98. In some embodiments, the rigid coupler 114 can be fixedly attached to the collapsible portion 98. In other embodiments, the rigid coupler 114 can be removably coupled to the collapsible portion 98, which can allow the collapsible portion 98 to be replaced with another collapsible portion as desired. The rigid coupler 114 includes a coupler fitting 118. In the illustrated embodiment, the coupler fitting 118 can be a "Zerk" fitting. The paint sprayer 14 includes a corresponding coupler receptacle 122 supported within the housing 42. The coupler receptacle 122 is fluidly connected to the first fluid connector 90 of the pump 82 via a first passageway 126. In the illustrated embodiment, the coupler receptacle 122 removably fluidly couples to the coupler fitting 118, to thereby fluidly connect the reservoir 86 to the pump 82.

With continued reference to FIG. 5, the reservoir 86 of the paint sprayer 14 is entirely enclosed within the housing 42. In the illustrated embodiment, the housing 42 further defines and encloses a second internal space 130 which is separated from the first internal space by a divider wall 134. The reservoir 86 is located within the second internal space 130. The divider wall 134 separates the reservoir 86 from the first internal space 78 so that leaked or spilled spray liquid emitted from the reservoir 86 can be contained within the second internal space 130 and will not interfere with the motor 46, pump 82, or other components located within the first internal space 78. The divider wall 134 may be formed as part of the clamshell halves 74, or may be formed as a separate component. The coupler receptacle 122 protrudes at least partially through the divider wall 134 and into the second internal space 130, which allows the coupler receptacle to access the reservoir 86 and couple to the coupler fitting 118.

In the illustrated embodiment, the housing 42 further includes a reservoir housing member 138 coupled to the main portion 66. In the illustrated embodiment, the reservoir housing member 138 is formed as a door or cover 138. The cover 138 can be removably coupled to the main portion 66 and selectively removable to reveal access to the second internal space 130 and permit insertion, removal, or replacement of the reservoir 86. In the illustrated embodiment, the cover 138 is pivotably coupled to the main portion 66 by a hinge 142 and pivotable about a hinge axis 146 between open and closed positions. The cover 138 may be secured to the main portion 66 in the closed position by a latch (e.g., over-center clasp), a clamp, a snap, a threaded fastener, twist-lock, bayonet lock, or by another means. The latch, the clamp, the snap, the threaded fastener, or the other means may be uncoupled by the user without the use of tools in some embodiments. When the cover 138 is in the closed position, the second internal space 130 is entirely closed or bounded between the cover 138 and the main portion 66. More particularly, the second internal space 130 is enclosed by the cover 138, the main portion 66, and the divider wall 134. As such, the reservoir 86 is enclosed within the housing 42, or within the second internal space 130 of the housing 42. In other embodiments (not shown), the reservoir housing member may instead be formed as a rotating cover that secures to the main housing portion by rotation (e.g., by twist-lock or bayonet lock). In some embodiments, cover 138 may be completely separable, attached via fasteners (or fastener heads) that engage in keyhole slots.

With continued reference to FIG. 5, the second internal space 130 is located generally above the handle portion 62 when the paint sprayer 14 is oriented in an upright or spray orientation as depicted in FIG. 5. The reservoir 86 is also located above the handle portion 62 in this orientation of the paint sprayer 14. The position of the reservoir 86 above the handle portion 62 balances the weight of the reservoir 86, including the spray liquid contained therein, above handle portion 62. This minimizes a moment developed about the handle portion 62 by the weight of the reservoir 86, making the paint sprayer 14 easier to hold and operate. As shown in FIG. 5, the handle portion 62 defines a longitudinal handle axis 150 that intersects the second internal space 130 and intersects the reservoir 86.

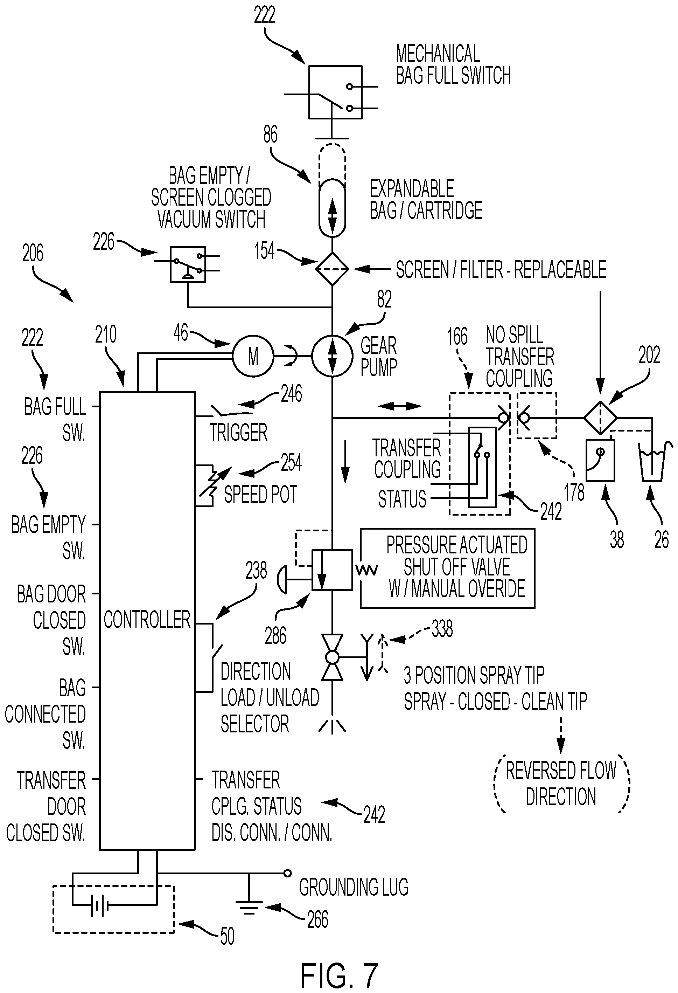

With reference to FIGS. 5 and 7, the paint sprayer 14 may also include a screen or filter 154. The filter 154 may be removable and/or replaceable. For example, in some embodiments, the filter 154 may be located adjacent or supported by the coupler receptacle 122. When the cover 138 is opened and the reservoir 86 is removed, the filter 154 may be accessed and removed/replaced via the second internal space 130.

With continued reference to FIG. 5, the paint sprayer 14 further includes a second passageway 158 extending between and fluidly connecting the second fluid connector 94 of the pump 82 with the nozzle assembly 58. As such, the reservoir 86 is fluidly connected with the nozzle assembly 58 via the first passageway 126, the pump 82, and the second passageway 158. A third passageway 162, or transfer passageway, is fluidly connected to the second passageway 158 and extends to a sprayer transfer connector 166 of the paint sprayer 14. The sprayer transfer connector 166 can selectively and removably couple to the transfer hose 22 (FIG. 1), which can fluidly couple the sprayer transfer connector 166 to an external source of the spray liquid such as the paint can 38. As will be further described herein, the pump 82 may be operated in the reverse mode to draw spray liquid from the paint can 38 into the reservoir 86. Specifically, the spray liquid moves from the paint can 38 to the reservoir 86 via the transfer hose 22, the sprayer transfer connector 166, the third passageway 162, the second passageway 158, the pump 82 via the second fluid connector 94 to the first fluid connector 90, the first passageway 126, and the coupler receptacle 122. Alternatively, the pump 82 may be operated in the forward mode to empty the reservoir 86 and expel the spray liquid out of the paint sprayer 14 via the sprayer transfer connector 166 along a similar pathway. The spray liquid exiting via the sprayer transfer connector 166 can move through the transfer hose 22 and flow back into the paint can 38, or to another external container.

With reference to FIGS. 2 and 3, the transfer hose 22 includes a hose segment 170 and a hose transfer coupler 174 coupled to the hose segment 170. The hose transfer coupler 174 includes a hose transfer connector 178, a port 182 fluidly connected to the hose transfer connector 178 and to the hose segment 170, and a handle 186. The hose transfer coupler 174 can also include an annular flange 190 at a base of the handle 186 and between the handle 186 and the hose transfer connector 178. The flange 190 may protect against drips of the spray liquid running from the hose transfer connector 178 to the handle 186.

Each of the sprayer transfer connector 166 and the hose transfer connector 178 can include a valve (not shown) that is normally biased toward a closed position. As such, when the sprayer transfer connector 166 is not coupled to the hose transfer connector 178 and the pump 82 is operated, spray liquid moving through the second passageway 158 will not pass through the sprayer transfer connector 166. When the hose transfer connector 178 is coupled to the sprayer transfer connector 166, the valve of each connector 166, 178 is actuated, so that the spray liquid can pass through each of the connectors 166, 178. In other words, the valves of the connectors 166, 178 are mating valves on each side of the connection. When the two connectors 166, 178 are not connected, the valves are biased to the closed position. When the two connectors 166, 178 are connected (e.g., via a bayonet connection, a threaded connection, or the like), the bias force is overcome and the valves are open to allow fluid transfer between the connectors 166, 178. Examples of the sprayer and hose transfer connectors 166, 178 may include, e.g., non-spill hydraulic connectors, such as fluid connectors used in hydraulic circuit applications that are subjected to high pressure impulses. Examples of such connectors include, e.g., VEP Series Couplers from Stucchi USA, Romeoville, IL, Everis^{™} Series Connectors from CPC Worldwide, Arden Hills, MN, and NSL Series Quick Couplings from Parker Hannifin Corp., Cleveland, OH.

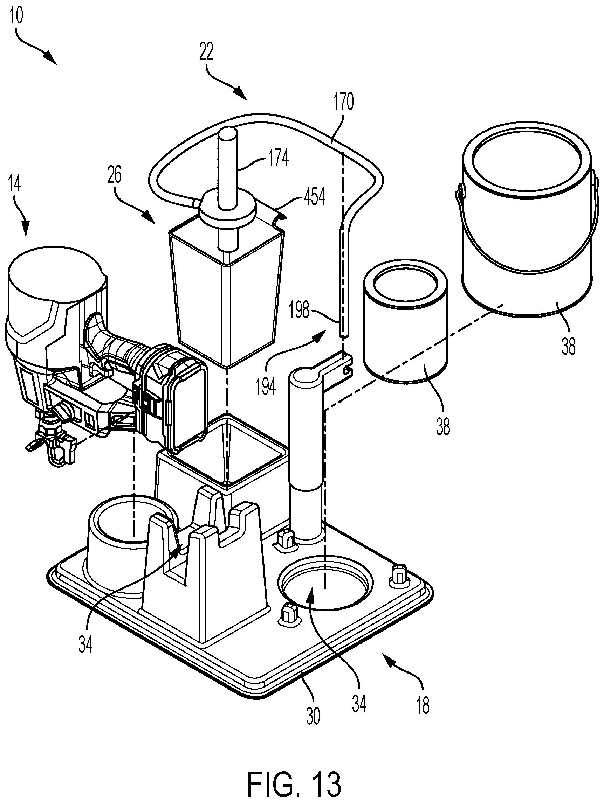

As shown in FIG. 13, the hose segment 170 of the transfer hose 22 includes a distal end 194 distal from the hose transfer coupler 174 and configured to be positioned in a container, such as the paint can 38 or the container 26. The distal end 194 can include a weight member 198 that maintains the distal end 194 submerged in the paint can 38 or in the container 26. The weight member 198 can be annular in shape and can be formed from a material having a density greater than that of the spray liquid, so that the weight member 198 will tend to sink toward the bottom of the container and remain submerged in the spray liquid. The distal end 194 may also include a close-fitting wiping collar (not shown). The collar may have a handle (not shown) and may normally be retained at a position spaced apart from a tip of the distal end 194. The spacing of the collar from the tip of the distal end 194 helps prevent the handle from contacting the spray liquid when the distal end 194 is located in the container. The collar may be slidably movable toward the tip of the distal end 194 to push or wipe excess spray liquid toward the tip and back into the container. The distal end 194 may also have a captivating feature (not shown), such as a clip, that prevents the collar from separating from the transfer hose 22.

With reference to FIGS. 2, 3, 7, and 13, the transfer hose 22 may also include a screen or filter 202. The filter 202 may be removable and/or replaceable. For example, in some embodiments, the filter 202 may be positioned within the hose transfer coupler 174, or may be positioned within the distal end 194 of the hose segment 170.

With reference to FIGS. 5 and 7, the paint sprayer 14 also includes a control system 206 for controlling various operations of the paint sprayer 14. The control system 206 includes an electronic controller 210 supported within the main portion 66 of the housing 42. The controller 210 controls the operation of the paint sprayer 14 according to three operation modes including a load mode, an unload mode, and a spray mode. The paint sprayer 14 is operable in the load mode and in the unload mode when the hose transfer connector 178 is coupled to the sprayer transfer connector 166. The paint sprayer 14 is operable in the spray mode when the hose transfer connector 178 is disconnected from the sprayer transfer connector 166.

In the load mode and the unload mode, the hose transfer connector 178 is connected to the sprayer transfer connector 166 and the valves (not shown) of the connectors 166, 178 are open. When the paint sprayer 14 is operated in the load mode, the motor 46 operates in the reverse rotational direction and the pump 82 operates in the reverse mode to draw spray liquid in through the sprayer transfer connector 166 (i.e., via the transfer hose 22 inserted into the external container) and direct the spray liquid into the reservoir 86 to fill the reservoir 86. When the paint sprayer is operated in the unload mode, the motor 46 operates in the forward rotational direction and the pump 82 operates in the forward mode to draw the spray liquid out of the reservoir 86 and expel the spray liquid out through the sprayer transfer connector 166 (i.e., and into the external container via the transfer hose 22). In the spray mode, the sprayer transfer connector 166 is disconnected from the hose transfer connector 178 and the valve (not shown) within the sprayer transfer connector 166 is closed. When the paint sprayer 14 is operated in the spray mode, the motor operates in the forward rotational direction and the pump operates in the forward mode to draw the spray liquid out of the reservoir 86 and direct the spray liquid through the nozzle assembly 58 to perform a paint spraying operation or a cleaning operation.

When the paint sprayer 14 is operated in the load mode or the unload mode, the spray liquid moves along a first fluid path 214 extending between the sprayer transfer connector 166 and the reservoir 86. Specifically, the first fluid path 214 includes the sprayer transfer connector 166, the third passageway 162, the second passageway 158, the pump 82, the first passageway 126, the coupler receptacle 122, and the reservoir 86. When the paint sprayer 14 is operated in the spray mode, the spray liquid moves along a second fluid path 218 extending between the reservoir 86 and the nozzle assembly 58. Specifically, the second fluid path 218 includes the reservoir 86, the coupler receptacle 122, the first passageway 126, the pump 82, the second passageway 158, and the nozzle assembly 58.

The control system 206 also includes a full reservoir sensor 222 and an empty reservoir sensor 226 each in electrical communication with the controller 210 and operable to detect when the reservoir 86 is full of spray liquid or empty, respectively. The full reservoir sensor 222 can be provided as, e.g., a mechanical sensor, a pressure sensor, a Hall sensor, or the like. For example, in some embodiments, the full reservoir sensor 222 can be a mechanical switch. When the reservoir 86 is full, the collapsible portion 98 is in a fully expanded state, and a distal end 230 of the collapsible portion 98 contacts the mechanical switch. The distal end 230 engages and actuates an actuator of the mechanical switch (e.g., a contact arm, a button, or the like). In response to being actuated, the full reservoir sensor 222 communicates a signal to the controller 210 indicating that the reservoir 86 is full. As the reservoir 86 empties and contracts, the collapsible portion 98 moves out of contact with the mechanical switch and the controller 210 stops receiving the signal. In another embodiment, the full reservoir sensor can be a Hall sensor. In this embodiment, the reservoir 86 may include one or more permanent magnets 234 which change position relative to the Hall sensor as the reservoir 86 expands or contracts during operation of the paint sprayer 14. In response to the reservoir 86 being full, the permanent magnets 234 move within sufficient proximity to the Hall sensor such that the Hall sensor detects that the reservoir 86 is full. In response to receiving the signal indicating that the reservoir 86 is full, the controller 210 can disable operation of the motor 46 to prevent the reservoir 86 from being over-filled and breaking. In some embodiments, the signal from the full reservoir sensor 222 may only be sent to the controller 210 when the paint sprayer 14 is in the load mode. In some embodiments, in response to receiving the signal indicating that the reservoir 86 is full, the controller 210 can actuate an indicator, such as an LED, to inform a user that the reservoir is full. The controller 210 can turn off such indication when it is no longer receiving the signal.

The empty reservoir sensor 226 can be provided as, e.g., a vacuum sensor, a Hall sensor, a pressure sensor, a mechanical sensor, or the like. For example, in one embodiment, the empty reservoir sensor 226 is a Hall sensor and the reservoir 86 includes the one or more permanent magnets 234. In response to the reservoir 86 being empty, the permanent magnets 234 move within sufficient proximity to the Hall sensor such that the Hall sensor detects that the reservoir 86 is empty (i.e., due to the permanent magnets 234 moving toward the Hall sensor upon contraction of the collapsible portion 98 of the reservoir 86). In the illustrated embodiment, the empty reservoir sensor 226 is provided as a vacuum sensor 226 positioned in fluid communication with the first passageway 126. When the pump 82 is operating in the forward mode and the reservoir 86 reaches an empty state, a vacuum develops within the first passageway 126. The vacuum sensor 226 detects the vacuum developed within the first passageway 126 and in response, communicates a signal to the controller 210 indicating that the reservoir is empty. In response to receiving the signal indicating that the reservoir 86 is empty, the controller 210 can disable operation of the motor 46 to prevent the pump 82 from running dry. In some embodiments, the signal from the empty reservoir sensor 226 may only be sent to the controller 210 when the paint sprayer 14 is in the unload mode or the spray mode. In some embodiments, in response to receiving the signal indicating that the reservoir 86 is empty, the controller 210 can actuate an indicator, such as an LED, to inform a user that the reservoir is empty. The controller 210 can turn off such indication when it is no longer receiving the signal.

With reference to FIGS. 4, 5, and 7, the paint sprayer 14 further includes a mode selection switch 238 incorporated into the control system 206. The mode selection switch 238 is electrically coupled to the controller 210 and operable to switch the operation mode of the paint sprayer 14. In some embodiments, the mode selection switch 238 is operable to select between the load mode, the unload mode, and the spray mode. In these embodiments, the mode selection switch 238 communicates a mode signal to the controller 210 indicative of the operation mode, and in response, the controller 210 places the paint sprayer 14 in the selected mode by enabling or disabling various functions. For example, in the load mode, the controller 210 enables the motor 46 to operate only in the reverse rotational direction, corresponding to the reverse mode of the pump 82. In the unload mode and the spray mode, the controller 210 enables the motor 46 to operate only in the forward rotational direction, corresponding to the forward mode of the pump 82. The controller 210 may further regulate the speed of the motor 46 in response to the selected mode.

With continued reference to FIGS. 5 and 7, the control system 206 also includes a transfer connection sensor 242 that detects when the hose transfer connector 178 is connected to the sprayer transfer connector 166. Because the valve of the sprayer transfer connector 166 opens when the hose transfer connector 178 is connected, the transfer connection sensor 242 may further detect when the valve of the sprayer transfer connector 166 is open. The transfer connection sensor 242 may be formed as, e.g., a mechanical sensor, a Hall sensor, or the like. The transfer connection sensor 242 is electrically connected with the controller 210. In response to detecting that the hose transfer connector 178 is connected to the sprayer transfer connector 166, the transfer connection sensor 242 communicates a signal to the controller 210 indicative of the connection. In response to the signal, the controller 210 may disable the spray mode and may limit the speed of the motor 46, as will be discussed further herein.

In some embodiments, the mode selection switch 238 may only be operable to select between the load mode and the unload mode. In such embodiments, the controller 210 may place the paint sprayer 14 in the spray mode automatically when the sprayer transfer connector 166 is not connected to the hose transfer connector 178. Specifically, the controller may place the paint sprayer 14 in the spray mode in response to a determination that the sprayer transfer connector 166 is not connected to the hose transfer connector 178, based upon the signal from the transfer connection sensor 242. In alternative embodiments (not shown), a mechanical "lock" may be employed that prevents the paint sprayer 14 from being put in the spray mode when the transfer connectors 166, 178 are coupled to one another. The mechanical lock may be automatically actuated when the transfer connectors 166, 178 are connected, and may block movement of the mode selection switch 238 to prevent the mode selection switch 238 from being moved to the spray mode position. An instruction could be placed on the paint sprayer 14 to inform the user of the requirement to remove the hose transfer connector 178 prior to moving the mode selection switch 238 to the spray mode position.

In some embodiments (not shown), the control system 206 of the paint sprayer 14 can further include a thermal sensor operable to detect when the motor 46 and/or other components of the paint sprayer 14 exceed a predetermined temperature limit. The thermal sensor can communicate a thermal signal to the controller 210 indicative of a temperature of the motor 46 and/or other components, and the controller may deactivate the motor 46 upon determining that the temperature detected by the thermal sensor exceeds the predetermined limit and/or provide an indication to the user.

The control system 206 further includes a trigger switch 246 operable to communicate an ON or OFF signal to the controller 210. In response to the ON signal, and provided certain other conditions are met, the controller 210 may activate the motor 46. The trigger switch 246 can be incorporated into the trigger assembly 70 and may be actuated by a trigger 250 of the trigger assembly 70.

With reference to FIGS. 4, 5, and 7, the control system 206 also includes a variable speed selector 254 (e.g., such as a potentiometer, or a rotatable dial). The selector 254 may be operable to adjust a speed of the motor 46, e.g., by varying the duty cycle of the motor 46 via, e.g., pulse width modulation. By varying the speed of the motor 46, a flow rate and pressure of the spray liquid discharged from the pump 82 can be varied. In the illustrated embodiment, the selector 254 may only be operable in the spray mode, to vary a flow rate, pressure, and/or spray pattern of the spray liquid discharged from the nozzle assembly 58. In the load mode and the unload mode, however, the speed of the motor 46 may be limited and may not be varied by adjusting the selector 254. This can be done for reasons of safety, i.e., to prevent spillage, splashing, or splatter while unloading the spray liquid from the reservoir 86, or to prevent damage to the reservoir 86 during loading.

With reference to FIGS. 5, 13, and 14 in some embodiments, the control system 206 of the paint sprayer 14 includes a tool support sensor 258 in electrical communication with the controller 210. The tool support sensor 258 is operable to detect when the paint sprayer 14 is properly positioned in a first support portion 262 of the base 30, as will be further described herein. In response to being actuated, the tool support sensor 258 communicates a signal to the controller 210 indicating that the paint sprayer 14 is properly positioned in the first support portion 262. In response to the signal, the controller 210 disables the spray mode of the paint sprayer 14. This prevents the paint sprayer 14 from spraying the spray liquid out the nozzle assembly 58 when positioned in the first support portion 262 of the base 30. The tool support sensor 258 can be provided as, e.g., a mechanical sensor, a Hall sensor, or the like. For example, in some embodiments, the tool support sensor 258 can be a mechanical switch. When the paint sprayer 14 is properly positioned in the first support portion 262, the first support portion 262 depresses an actuator of the mechanical switch. In other embodiments, the tool support sensor 258 is a Hall sensor. In these embodiments, the first support portion 262 of the base 30 includes a permanent magnet that is detected by the Hall sensor when the paint sprayer 14 is properly supported in the first support portion 262.

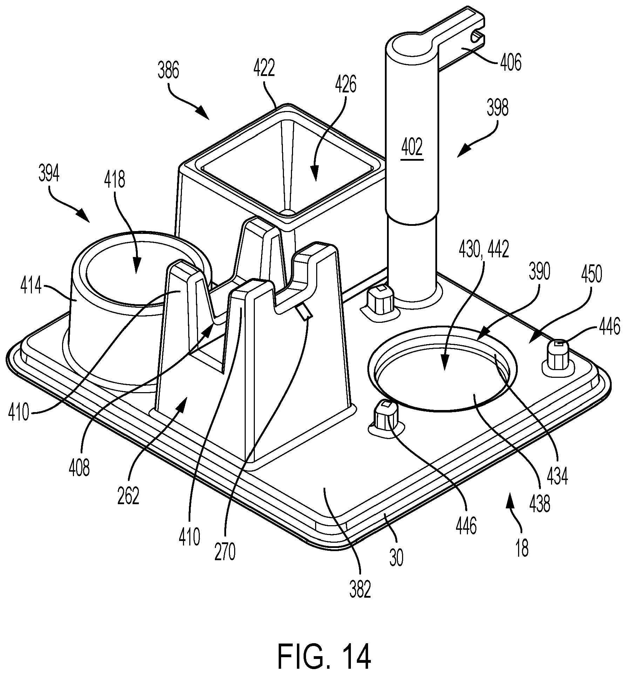

With reference to FIG. 7, in some embodiments, the paint sprayer 14 also includes a grounding connection 266. The grounding connection 266 may be electrically connected to conductive components of the paint sprayer 14 (e.g., the motor 46, the pump 82, and/or the nozzle assembly 58), which may accumulate a static charge during operation of the paint sprayer 14. The base 30 may include a corresponding grounding connection 270 (FIG. 14) that electrically connects to the grounding connection 266 when the paint sprayer 14 is properly positioned in the base 30. The connection between the base 30 and the grounding connection 266 can facilitate the safe discharge of static charge accumulated in the paint sprayer 14. This helps prevent unintended static discharges (e.g., arcing) during operation of the paint sprayer 14, which can be unsafe when working with combustible fluids.

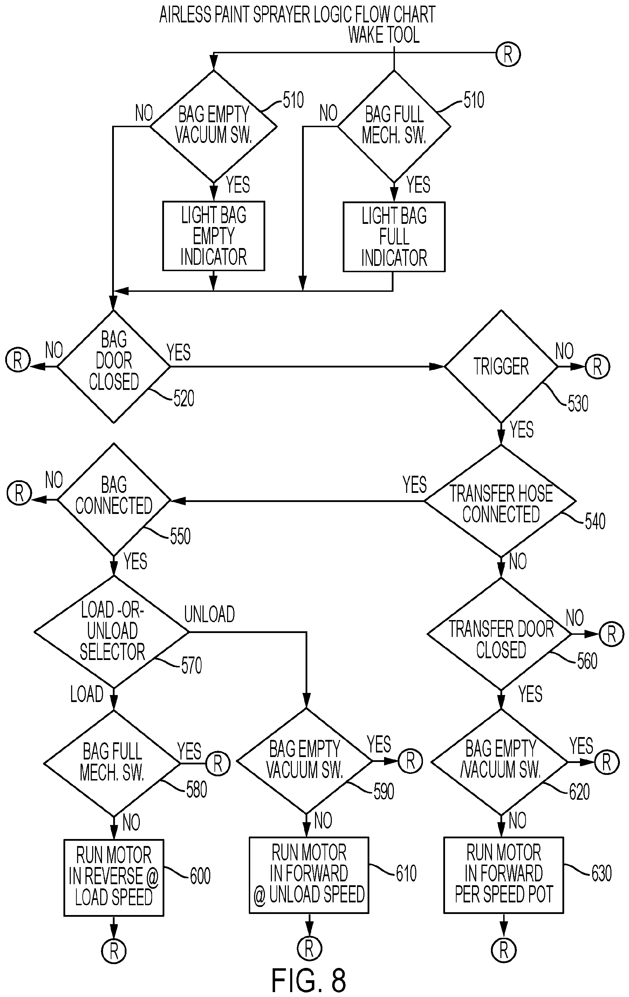

FIG. 8 illustrates a logic flow chart depicting a control logic by which the controller 210 may operate the paint sprayer 14. At step 510, the controller 210 determines whether the full reservoir sensor 222 indicates that the reservoir 86 is full, and whether the empty reservoir sensor 226 indicates that the reservoir 86 is empty. If so, a full light or an empty light, respectively (or other indicator; not shown) may be activated, and then proceed to step 520. If not, proceed to step 520. At step 520, the controller determines whether the cover 138 (FIG. 4) is closed (e.g., based on a signal from a closed cover sensor; not shown). If so, proceed to step 530. If not, return to step 510. At step 530, the controller 210 determines whether the trigger switch 246 is actuated. If so, proceed to step 540. If not, return to step 510. At step 540, the controller 210 determines whether the hose transfer connector 178 is coupled to the sprayer transfer connector 166, based on a signal from the transfer connection sensor 242. If so, proceed to step 550. If not, proceed to step 560. At step 550, the controller determines whether the reservoir 86 is connected to the coupler receptacle 122 (e.g., via a signal from a coupler receptacle sensor; not shown). If so, proceed to step 570. If not, return to step 510. At step 570, the controller 210 determines whether the load mode or the unload mode has been selected by the mode selection switch 238. If load mode is selected, proceed to step 580. If unload mode is selected, proceed to step 590. At step 580, the controller determines whether the reservoir 86 is full based upon a signal from the full reservoir sensor 222. If so, return to step 510. If not, proceed to step 600. At step 600, the controller 210 operates the motor 46 in the reverse direction and at a load speed. Returning to step 590, if the controller 210 has determined that the unload mode is selected at step 570, then at step 590 the controller 210 determines whether the reservoir is empty based on a signal from the empty reservoir sensor 226. If so, return to step 510. If not, proceed to step 610. At step 610, the controller 210 operates the motor 46 in the forward direction and at an unload speed. Returning to step 560, if the controller 210 has determined that the transfer hose 22 is not connected at step 540, then at step 560 the controller 210 determines whether a transfer door (not shown) is closed. If so, proceed to step 620. If not, return to step 510. At step 620, the controller determines whether the reservoir is empty based on a signal from the empty reservoir sensor 226. If so, return to step 510. If not, proceed to step 630. At step 630, the controller 210 operates the motor 46 in the forward direction and at a variable speed according to the variable speed selector 254.

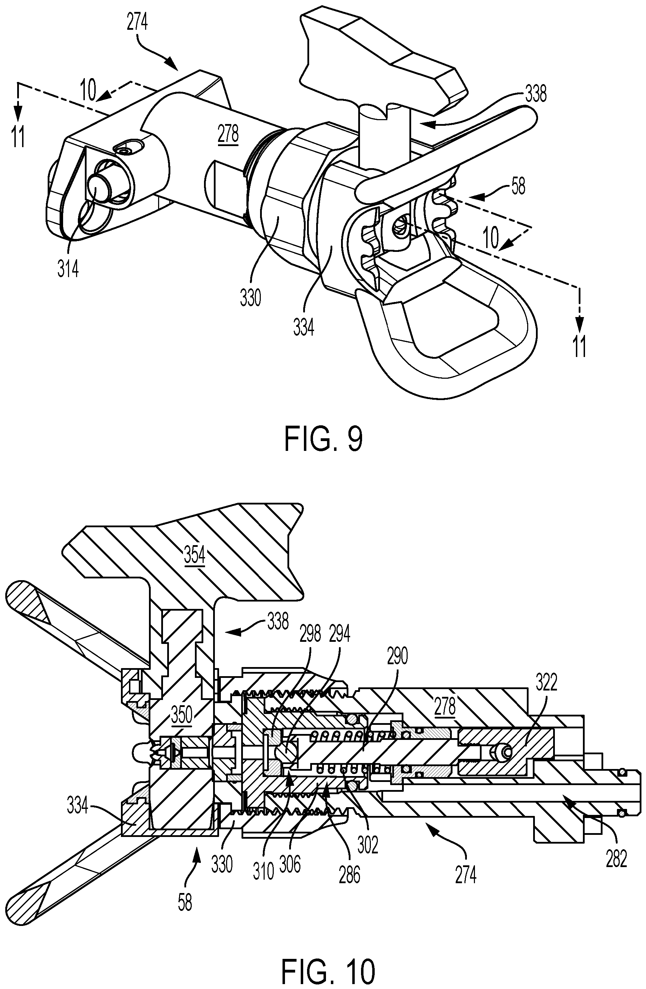

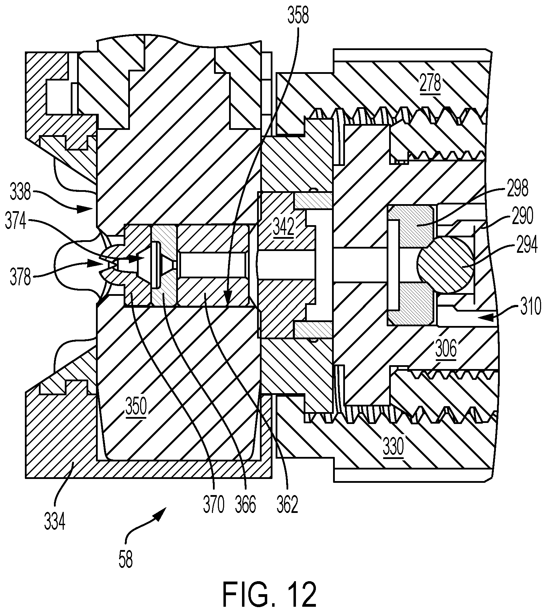

FIGS. 9-12 illustrate the nozzle assembly 58 of the paint sprayer 14. The nozzle assembly 58 includes a valve assembly 274 having a valve body 278 that defines an inlet passageway 282 by which the spray liquid enters the nozzle assembly 58 from the second passageway 158. The valve assembly 274 also includes a shut-off valve 286 which includes a plunger 290, a ball 294 supported at a forward end of the plunger 290, and a ball seat 298 in facing relationship with the ball 294. The plunger 290 is biased by a spring 302 toward a closed position with the ball 294 seated against the ball seat 298. The valve assembly 274 also includes an outlet body 306 defining an outlet of the valve assembly 274.

During operation of the paint sprayer 14 in the spray mode, the spray liquid flows through the inlet passageway 282 and enters an annular space 310 defined within the outlet body 306. The spray liquid within the annular space 310 is pressurized due to the operation of the pump 82 and exerts a force on the forward end of the plunger 290, causing the plunger 290 to retract against the biasing force of the spring 302 and away from the ball seat 298 to an open position. The spray liquid then flows through an opening in the ball seat 298 and into the nozzle assembly 58.

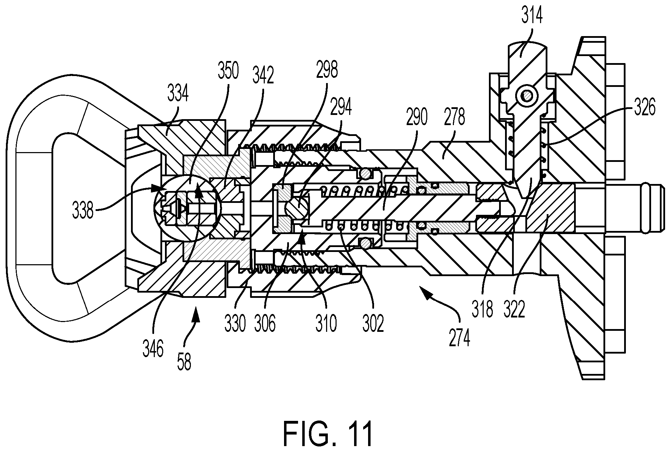

With reference to FIG. 11, the valve assembly 274 also includes a pressure-release button 314 that is actuable to manually retract the plunger 290 to the open position (e.g., to facilitate cleaning the valve assembly 274 and the nozzle assembly 58). The pressure-release button 314 includes a cam portion 318 that engages a follower 322 attached to the plunger 290. A spring 326 biases the pressure-release button 314 toward a released position. When the pressure-release button 314 is pressed into the valve body 278, the cam portion 318 exerts a force on the follower 322 that causes the follower 322, with the plunger 290, to retract to the open position of the plunger 290.

The shut-off valve 286, including the plunger 290, and the spring 302, may be tuned to actuate in response to spray liquids having a fluid viscosity or pressure falling within a desired range, which may include, e.g., various types of paints or stains. When a different, less viscous spray liquid is used in the paint sprayer 14, such as water, mineral solvents, or preservatives, the pressure-release button 314 permits the user to manually open the shut-off valve 286 to facilitate spraying these less viscous spray liquids. The pressure-release button 314 also facilitates use of the paint sprayer 14 with a variety of spray liquids (i.e., at pressures lower than what is normally required to open the valve assembly 274), to achieve different spray characteristics, as desired.

In some embodiments (not shown), the pressure-release button 314 may be delimited by a detent feature coupled to a user control member, such as a dial. The user control member may be actuable to delimit how far the pressure-release button 314 may be depressed, corresponding to different stages of the open position of the shut-off valve 286. The different positions of the user control member would cause the detent feature to engage the pressure-release button 314 at different stages, thereby controlling the stage of the open position of the shut-off valve 286. Different positions of the pressure-release button 314 can thereby be tuned to different spray liquids (e.g., water, mineral solvent and preservative) to optimize spray characteristics for each spray liquid type.

With reference to FIGS. 10-12, the nozzle assembly 58 includes a nozzle body 330 having internal threads that removably tighten to external threads on the valve body 278. The nozzle assembly 58 also includes a guard 334 attached to the nozzle body 330, a removable and adjustable spray tip 338, and a saddle 342 that seals against the spray tip 338. The spray tip 338 is removably and adjustably received into a receptacle 346 defined by the guard 334 and by the saddle 342. The spray tip 338 includes a substantially cylindrical barrel 350 that removably and rotatably resides within the receptacle 346, and a handle 354 attached to the barrel 350 and having a shape indicative of an intended flow direction through the spray tip 338. The barrel 350 defines a bore 358 extending transversely therethrough relative to a longitudinal dimension of the barrel 350. The saddle 342 is supported within the guard 334 and effects a seal against an outer surface of the barrel 350. Spray liquid entering from the valve assembly 274 flows through the saddle 342 and into an upstream end of the bore 358 of the barrel 350, and then exits the spray tip 338 out of a downstream end of the bore 358.

The spray tip 338 also includes three nozzle inserts positioned within the bore 358. The nozzle components include a guide nozzle insert 362, a diverging nozzle insert 366, and a converging nozzle insert 370. Spray liquid flowing into the bore 358 first flows through the guide nozzle insert 362, which directs the spray liquid in a stream toward the diverging nozzle insert 366. Spray liquid entering the diverging nozzle insert 366 turbulates within a turbulation chamber 374 defined between the diverging and converging nozzle inserts 366, 370. The turbulated spray liquid then flows through the converging nozzle insert 370, which defines a nozzle outlet 378. Spray liquid exiting the nozzle outlet 378 atomizes in a spray that can be directed toward the workpiece.

The spray tip 338 can be removed from the receptacle 346, e.g., for cleaning or to be replaced with another spray tip. The spray tip 338 can also be rotated 180 degrees within the receptacle 346 so that the three nozzle inserts become arranged in reverse order relative to the order depicted in FIG. 10 (the intended flow direction). With the spray tip 338 rotated 180 degrees, cleaning solution can be directed through the bore 'backwards' (i.e., in a direction opposite the intended flow direction) to facilitate cleaning the nozzle inserts.

### Primary Operation

With reference to FIGS. 3, 5, 7, 8, 10, and 13, operation of the paint sprayer 14 will now be described. Beginning with loading the reservoir 86 with a spray liquid, such as paint, a user first positions the reservoir 86 in the paint sprayer 14 and closes the cover 138. Then, the user couples the hose transfer connector 178 to the sprayer transfer connector 166 and positions the distal end 194 of the transfer hose 22 in the container (e.g., the paint can 38). Then, the user actuates the mode selection switch 238 to place the paint sprayer 14 in the load mode. The user then presses the trigger 250 to actuate the trigger switch 246 and activate the motor 46. This causes the pump 82 to run in the reverse mode, drawing spray liquid from the paint can 38 and pumping the spray liquid into the reservoir 86. In some embodiments, pressing the trigger 250 in the load mode initiates an automatic loading or automatic filling cycle. The automatic filling cycle will run until the full reservoir sensor 222 stops the cycle. The user can stop the automatic filling cycle at any time by actuating the trigger 250 a second time. In this way, a user cannot overfill the reservoir 86, which could cause a rupture. When the user is finished loading (e.g., the reservoir 86 is full, or a desired volume of the spray liquid has otherwise been loaded into the reservoir 86), the user releases the trigger 250 and uncouples the hose transfer connector 178 from the sprayer transfer connector 166. If desired, the user can then place the hose transfer connector 178 in another container (e.g., the container 26) containing a fluid, such as water or mineral solvent, which helps prevent drying or hardening of the spray liquid (i.e., if the spray liquid is paint). The user then adjusts the mode selection switch 238 to the spray mode (or, in some embodiments, spray mode is automatically initiated upon disconnection of the hose transfer connector 178 from the sprayer transfer connector 166). The user then presses the trigger 250 to actuate the trigger switch 246 and activate the motor 46. This causes the pump 82 to run in the forward mode, drawing spray liquid from the reservoir 86 and pumping the spray liquid toward the nozzle assembly 58. The spray liquid enters the inlet passageway 282, where pressure builds until it overcomes the biasing force of the shut-off valve 286 causing the shut-off valve 286 to open. When the shut-off valve 286 opens, pressurized spray liquid flows from the inlet passageway 282 through the shut-off valve 286 and exits through the spray tip 338 in an atomized spray.

The aforementioned loading and spraying steps are then repeated each time the reservoir 86 is emptied and requires re-filling, or until the painting job is completed. When painting is complete, the user couples the hose transfer connector 178 to the sprayer transfer connector 166, and positions the distal end 194 of the transfer hose 22 in the container (e.g., the paint can 38). If any spray liquid remains in the reservoir 86, the user may put the paint sprayer in unload mode by moving the mode selection switch 238 to the unload position, and then run the motor 46 by pulling the trigger 250. This causes the pump 82 to operate in the forward mode to discharge spray liquid from the reservoir 86 back into the paint can 38 (or, into a different container, as desired) until the user is finished spraying (e.g., when the bag is empty as indicated by motor stopping due to actuation of the empty reservoir sensor 226). The user may then proceed to clean the paint sprayer 14 as described below.

### Cleaning Operation

To clean the paint sprayer 14, the user places the distal end 194 of the transfer hose in a container (e.g., such as the container 26) holding a cleaning fluid (e.g., water, mineral solvents, or the like). The user then couples the hose transfer connector 178 to the sprayer transfer connector 166 (if not already coupled). Then, the steps described above with regard to the primary operation for loading and spraying the spray liquid are repeated using the cleaning fluid. That is, the cleaning fluid is loaded into the reservoir 86 and then sprayed out the nozzle assembly 58 to clean the components of the paint sprayer 14. The user may repeat these loading and spraying steps as many times as needed to perform further cleaning. If desired, the user may also operate the paint sprayer 14 in the unload mode as described above to more rapidly move the cleaning fluid through the components, which may increase effectiveness of the cleaning. As a final step, a preservative may be pumped through the paint sprayer 14 to coat the internal components (e.g., prior to storing the paint sprayer 14) according to the same steps described above regarding the primary operation.

### Mixing Operation

If desired, the spray liquid can be mixed within a container, such as the paint can 38 or the container 26, by operating the paint sprayer 14. First, the user performs the steps of the primary operation described above including connecting the transfer hose 22 to the paint sprayer 14 and loading the reservoir 86 with the spray liquid. Then, the user places the paint sprayer 14 in unload mode and operates the paint sprayer 14 to load the spray liquid back into the container from which it was drawn. The spray liquid re-entering the container will mix within the container due to the loading and unloading operations.

### The Painting System

FIGS. 13 and 14 illustrate all or portions of the painting system 10 in further detail. As described herein, the painting system 10 includes the paint sprayer 14, the base 30, the transfer hose 22, and the container 26. The painting system 10 is also operable with the paint can 38, which can be of different sizes and can contain a paint material, stain material, a solvent material, a preservative material, or other spray liquids.

The base 30 includes a base wall 382, the first support portion 262, a second support portion 386, a third support portion 390, and a tip well 394. Each of the first, second, and third support portions 262, 386, 390, and the tip well 394, may be coupled to the base wall 382, or, alternatively, may be integrally formed with the base wall 382. The base 30 also includes a hose guide 398 coupled to the base wall 382. The hose guide 398 includes an elongated shaft portion 402 extending upward from the base wall 382, and a hook portion 406 located at a distal end of the shaft portion 402. The hook portion 406 receives and supports the hose segment 170 at an elevated position relative to the base wall 382, which conveniently facilitates positioning the distal end 194 of the transfer hose 22 in the container (e.g., the paint can 38 or the container 26).

With reference to FIG. 14, the first support portion 262 defines a first receptacle 408 that removably receives and supports the paint sprayer 14 in the orientation illustrated in FIGS. 1 and 2, with the spray tip 338 positioned within the tip well 394 and pointing downward. More specifically, the first support portion 262 includes a plurality of raised posts 410 spaced apart from one another such that the posts 410 extend on either lateral side of the housing 42 of the paint sprayer 14 to stably support the paint sprayer 14. The first support portion 262 engages the paint sprayer 14 beneath its center of gravity (CG), so that the paint sprayer 14 remains stably balanced on the first support portion 262. In some embodiments (not shown), the first support portion 262 may include an additional shelf positioned to support the battery pack 50 when the battery pack 50 is coupled to the paint sprayer 14. The shelf may ensure that the paint sprayer 14 does not tip over or otherwise fall off of the first support portion 262 when batteries of different sizes and weights are coupled thereto and affect the CG of the paint sprayer 14.

The tip well 394 includes a raised annular (or, circular) wall 414 protruding upward from the base wall 382 and defining a recess or well 418 therewithin. The well 418 receives the spray tip 338 of the nozzle assembly 58 when the paint sprayer 14 is received into the first receptacle 408 of the first support portion 262. The spray tip 338 or guard 334 may contact the base wall 382 in some embodiments. In other embodiments, the spray tip 338 is suspended above the base wall 382 and the paint sprayer 14 is entirely supported by the first support portion 262. The tip well 394 captures drips of the spray liquid that may drip from the spray tip 338. In some embodiments, the tip well 394 may include a disposable liner (not shown). The tip well 394 (or, the liner) can be filled with water, mineral solvent, or another material that can help prevent drying or hardening of the spray liquid.

The first support portion 262 supports the weight of the paint sprayer 14 with the spray tip 338 oriented downward and suspended within the tip well 394. This orientation ensures safety and minimizes spills during loading or unloading of the spray liquid into or out of the reservoir 86 (i.e., when operating the paint sprayer in the load mode or the unload mode). When supported in this way, the user will not have to hold the paint sprayer 14 during these operations. This leaves the user's hands free to perform other steps of the loading and unloading processes.

In the illustrated embodiment, the second support portion 386 includes a raised rectangular (or, square or circular or ovular in some cases) wall 422 protruding upward from the base wall 382 and defining a second receptacle 426 for removably receiving the container 26. In some embodiments (not shown), in place of the rectangular wall 422, the second support portion 386 can include a plurality of spaced-apart protrusions that define the second receptacle. The protrusions are intended to prevent horizontal movement of the container 26, or a liner (not shown) for receiving another liquid such as water, mineral solvent, or preservative.

The third support portion 390 includes an annular (or, circular) recess 430 recessed into the base wall 382 and defined by a cylindrical wall 434 and a bottom wall 438. The cylindrical wall 434 and the bottom wall 438 define a third receptacle 442 that receives a paint can 38 of a first size (e.g., one pint). The third support portion 390 further includes a plurality of protrusions 446 (three in the illustrated embodiment) which are spaced radially outward from and about a circumference of the cylindrical wall 434. The protrusions 446 cooperatively define a fourth receptacle 450 that receives a paint can of a second, larger size (e.g., one quart). The protrusions 446 contact the sides of the paint can 38 of the second size to stably hold the paint can 38. In some embodiments (not shown), the protrusions 446 may be movable (i.e., slidable in a radial direction) so as to accommodate paint cans of other sizes (e.g., one gallon). The movable protrusions can be slidable, lockable, removable, and/or collapsible into the base wall 382.

The container 26 can include a lip 454 which can by grasped by the user, and measurement indicia on the sides. The container 26 can also include ridges (not shown) disposed vertically on a sidewall of the container 26 and near a corner thereof for supporting the hose transfer coupler 174 (FIG. 1) in an upright position.

In other embodiments (not shown), the base 30 can include one or more additional support portions for supporting additional containers, such as a second paint can 38 or a second container 26.

As discussed herein, in some embodiments, the paint sprayer 14 includes the tool support sensor 258 operable to detect when the paint sprayer 14 is properly positioned in the first support portion 262 of the base 30. In other embodiments, the first support portion 262 of the base 30 can include the tool support sensor, rather than the paint sprayer 14. The tool support sensor 258 of the base 30 can detect that the paint sprayer 14 is properly supported on the first support portion 262 and communicate a signal to the controller 210 (e.g., via RFID, Bluetooth, WiFi, NFC, a wired communication, or other communication means). The controller 210 will disable the spray mode in response to the signal.

As discussed herein, the base 30 can further include a grounding connection 270 positioned on the first support portion 262 so as to contact the grounding connection 266 of the paint sprayer 14. Contact between the ground connections 266, 270 facilitates grounding of the paint sprayer to reduce a likelihood of arcing in the paint sprayer 14 when loading or unloading. This improves safety of the painting system 10, particularly when working with combustible fluids.

### II. Second Embodiment

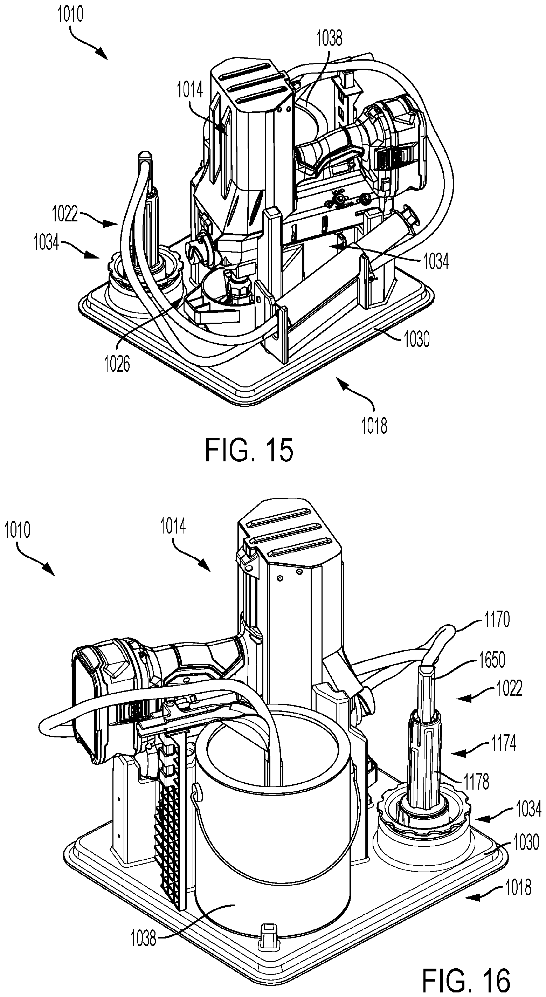

FIGS. 15-38 illustrate a painting system 1010 that is substantially similar to the painting system 10 described herein and in connection with FIGS. 1-14. The following description will primarily focus on the differences or additional features of the painting system 1010 as compared to the painting system 10. Features and elements of the painting system 1010 similar to or corresponding to like features and elements of the painting system 10 will be assigned the same reference numbers plus "1000."

With reference to FIGS. 15 and 16, the painting system 1010 includes a paint sprayer 1014, a base assembly 1018, and a transfer hose 1022. The base assembly 1018 includes a base 1030 with a plurality of receptacles 1034 for removably receiving and storing the paint sprayer 1014, the transfer hose 1022, and a paint can 1038. The transfer hose 1022 selectively fluidly couples to the paint sprayer 1014 to facilitate loading or unloading the paint sprayer 1014 with a spray liquid (e.g., paints, stains, or cleaning solutions such as water, solvents, or the like).

### The Paint Sprayer

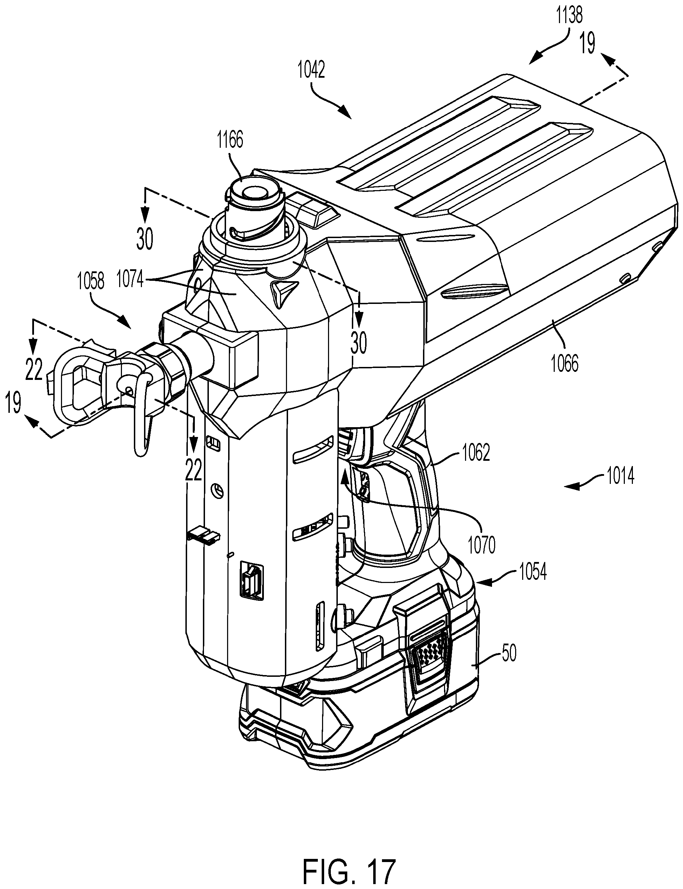

With reference to FIGS. 17-19, in the illustrated embodiment, the paint sprayer 1014 is a portable, electric paint sprayer 1014 that includes a housing 1042 and an electric motor 1046. The paint sprayer 1014 is operable with the battery pack 50 removably coupled to a battery receptacle 1054 located at a bottom end of the housing 1042. The motor 1046 includes a stator assembly 1047 and a rotor assembly 1048 that is rotatable with respect to the stator assembly 1047 about an axis. In some embodiments, the motor 1046 can be a brushless direct current ("BLDC") motor where the stator assembly is electronically commutated.

With continued reference to FIGS. 17-19, the paint sprayer 1014 also includes a nozzle assembly 1058 coupled to the housing 1042. The housing 1042 includes a handle portion 1062 coupled to the battery receptacle 1054, and a main portion 1066 coupled to the nozzle assembly 1058. The handle portion 1062 supports a trigger assembly 1070 that is electrically connected to the motor 1046 and operable to selectively activate the motor 1046. In the illustrated embodiment, the housing 1042 can include a pair of clamshell halves 1074 coupled together along a central parting plane and forming both the handle portion 1062 and the main portion 1066.

The main portion 1066 of the housing 1042 encloses a first internal space 1078 in which the motor 1046 is supported. The paint sprayer 1014 also includes a pump 1082 operably coupled to the motor 1046 and positioned within the first internal space 1078 of the main portion 1066. The pump 1082 is fluidly connected to the nozzle assembly 1058 and mechanically coupled to the motor 1046. The paint sprayer 1014 further includes a reservoir 1086 positioned within the housing 1042 and fluidly connected to the pump 1082. The reservoir 1086 can receive, store, and supply the spray liquid. In particular, the reservoir 1086 can receive the spray liquid from the pump 1082, store the spray liquid, and also supply the spray liquid to the pump 1082.

In the illustrated embodiment, the pump 1082 includes a first inlet 1090, a second inlet 1094, and an outlet 1096. The pump 1082 is operable in both a forward mode and a reverse mode. In the forward mode, the pump 1082 draws in the spray liquid through the first inlet 1090 and expels the spray liquid through the second inlet 1094 or the outlet 1096. Conversely, in the reverse mode, the pump 1082 draws in the spray liquid through the second inlet 1094 and expels the spray liquid through the first inlet 1090. The pump 1082 may be operated in the forward mode by operating the motor 1046 in a first, or forward, rotational direction, and may be operated in the reverse mode by operating the motor 1046 in an opposite second, or reverse, rotational direction. In the illustrated embodiment, the pump 1082 is a gear pump. In other embodiments, the pump 1082 may instead be another type of pump, such as, e.g., a piston pump, a diaphragm pump, a peristaltic pump, or the like.

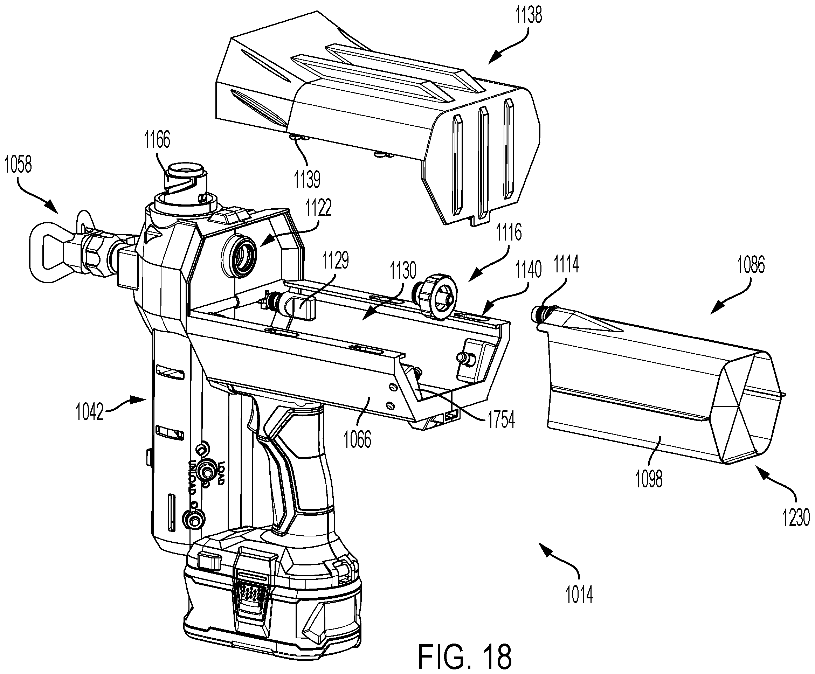

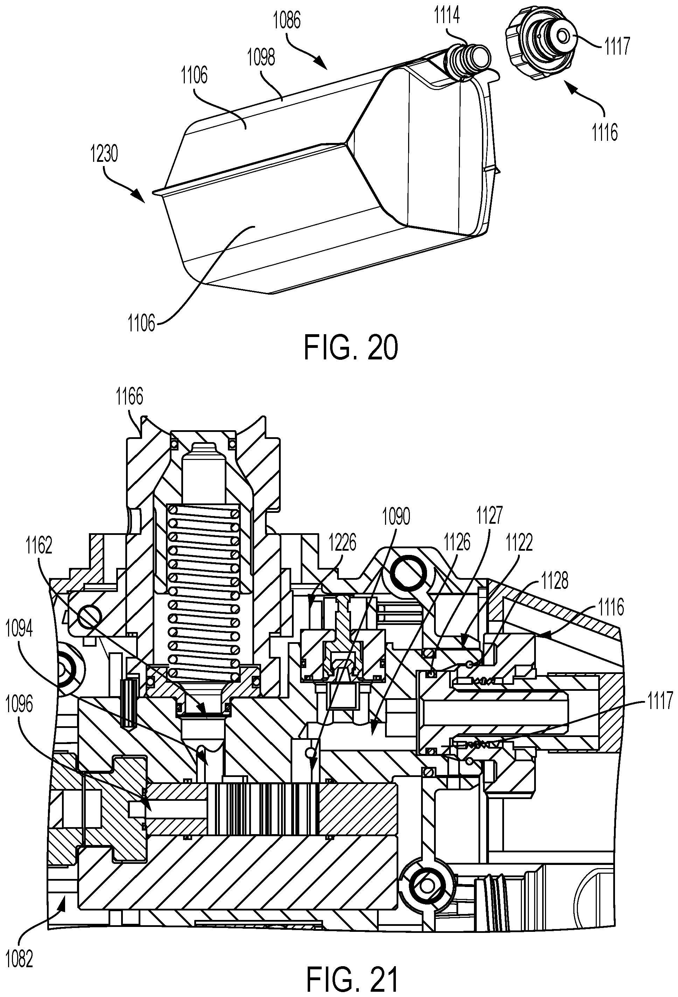

With reference to FIGS. 18-20, in the illustrated embodiment, the reservoir 1086 is a collapsible reservoir having a collapsible portion 1098 capable of expanding or contracting in response to the reservoir 1086 being loaded or unloaded with the spray liquid. The reservoir 1086 defines a variable internal volume 1102 and expands and contracts between full and empty states. When the collapsible portion 1098 expands, the variable internal volume 1102 increases, and when the collapsible portion 1098 contracts, the variable internal volume 1102 decreases. In some embodiments, the variable internal volume 1102 in the empty state of the reservoir 1086 is ninety percent or less of the variable internal volume 1102 in the filled state. In other embodiments, the variable internal volume 1102 in the empty state of the reservoir 1086 is fifty percent or less of the variable internal volume 1102 in the filled state. As shown in FIG. 20, the collapsible portion 1098 can be formed as a flexible bag 1098 having flexible walls 1106 formed from, e.g., sheets of multi-ply plastic material that are bonded (e.g., crimped, glued, etc.) on all edges. As the collapsible portion 1098 expands, the flexible walls 1106 unfold away from each other, and as the collapsible portion 1098 contracts, the flexible walls 1106 fold toward one another.

The reservoir 1086 also includes a rigid coupler 1114 coupled to the collapsible portion 1098. In the illustrated embodiment, the rigid coupler 1114 is fixedly attached to the collapsible portion 1098 and defines an inlet of the reservoir 1086. The rigid coupler 1114 is externally threaded.

With continued reference to FIGS. 18-20, the paint sprayer 1014 also includes a reservoir adapter 1116. The reservoir adapter 1116 is internally threaded and removably threads onto the rigid coupler 1114 of the reservoir 1086. The reservoir adapter 1116 includes a connector plug 1117 that is sized and shaped to removably couple to the paint sprayer 1014, thereby fluidly connecting the pump 1082 with the reservoir 1086. Specifically, the paint sprayer 1014 includes a coupler receptacle 1122 supported within the housing 1042. The coupler receptacle 1122 is fluidly connected to the first inlet 1090 of the pump 1082 via a first passageway 1126 (FIG. 21). The coupler receptacle 1122 removably fluidly couples to the connector plug 1117 to thereby fluidly connect the reservoir 1086 to the pump 1082. As shown in FIG. 21, the connector plug 1117 carries a gasket 1127 (e.g., an O-ring) which creates a fluid tight seal between the connector plug 1117 and the coupler receptacle 1122. The connector plug 1117 also carries a round circlip or wire snap ring 1128 that engages with the coupler receptacle 1122 to secure the removable connection.

As shown in FIG. 18, the paint sprayer 1014 can also include an inlet plug 1129 that is externally threaded and can thread onto the reservoir adapter 1116 in place of the reservoir 1086 when the reservoir 1086 is disconnected. The reservoir adapter 1116 with the inlet plug 1129 can be installed in the coupler receptacle 1122 to prevent dirt or other debris from entering the coupler receptacle 1122 when the reservoir 1086 is not installed. The housing 1042 includes a plug mount protruding into the second internal space 1130 to which the inlet plug 1129 can be selectively mounted and thereby stored when not in use.

With reference to FIGS. 17-19, the reservoir 1086 of the paint sprayer 1014 is entirely enclosed within the housing 1042. The housing 1042 further defines and encloses a second internal space 1130 which is separated from the first internal space 1078 by a divider wall 1134. The reservoir 1086 is located within the second internal space 1130. The divider wall 1134 separates the reservoir 1086 from the first internal space 1078 so that leaked or spilled spray liquid emitted from the reservoir 1086 can be contained within the second internal space 1130 and will not interfere with the motor 1046, pump 1082, or other components located within the first internal space 1078. The divider wall 1134 may be formed as part of the clamshell halves 1074 or may be formed as a separate component. The coupler receptacle 1122 protrudes at least partially through the divider wall 1134 and into the second internal space 1130, which allows the coupler receptacle to access the reservoir 1086 and couple to the reservoir adapter 1116.

In the illustrated embodiment, the housing 1042 further includes a reservoir housing member 1138 coupled to the main portion 1066. In the illustrated embodiment, the reservoir housing member 1138 is formed as a door or cover 1138. The cover 1138 removably couples to the main portion 1066 and selectively removes to reveal the second internal space 1130 and permit insertion, removal, or replacement of the reservoir 1086. In the illustrated embodiment, the cover 1138 is completely removable from the main portion 1066 and selectively secures to the main portion 1066 via engagement between protrusions 1139 on the reservoir housing member 1138 being tightly received into slots 1140 (FIG. 18) defined in the main portion 1066. In other embodiments, such as that described in connection with FIG. 5 herein, the cover can instead be secured to the main portion by a hinge (e.g., hinge 142) and pivotable about a hinge axis 146 between open and closed positions. The cover 1138 can further be secured to the main body portion 1066 in a manner consistent with that described herein with respect to FIG. 5.

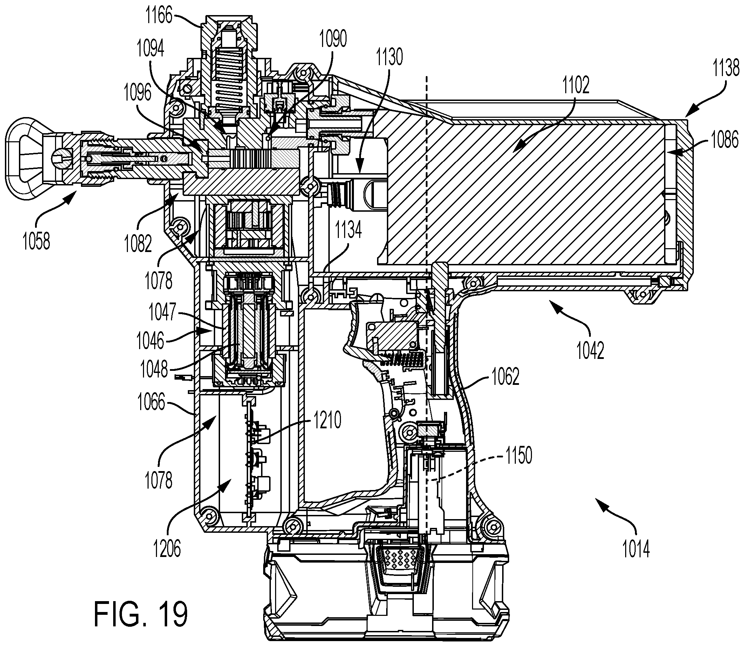

With reference to FIG. 19, the second internal space 1130 is located generally above the handle portion 1062 when the paint sprayer 1014 is oriented in an upright or spray orientation. The reservoir 1086 is also located above the handle portion 1062 in this orientation of the paint sprayer 1014. As shown in FIG. 19, the handle portion 1062 defines a longitudinal handle axis 1150 that intersects the second internal space 1130 and intersects the reservoir 1086.

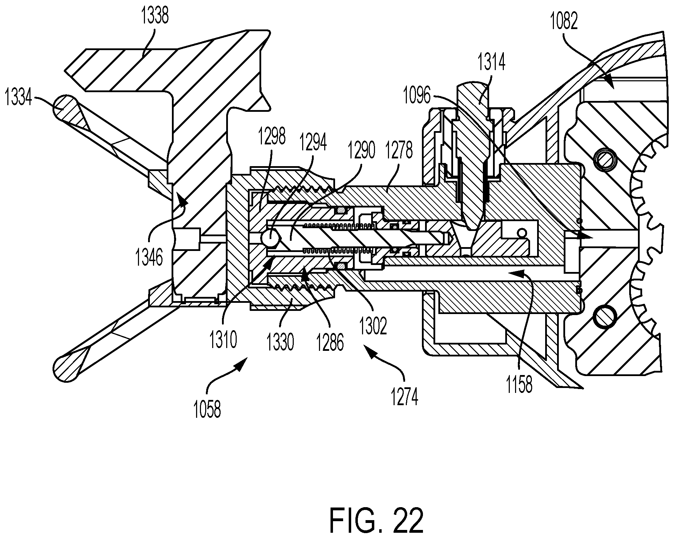

With reference to FIGS. 21 and 22, the paint sprayer 1014 further includes a second passageway 1158 extending between and fluidly connecting the outlet 1096 of the pump 1082 with the nozzle assembly 1058. As such, the reservoir 1086 is fluidly connected with the nozzle assembly 1058 via the first passageway 1126, the pump 1082, and the outlet 1096. A third passageway 1162, or transfer passageway, is fluidly connected to the second inlet 1094 and the second passageway 1158 and extends to a sprayer transfer connector 1166 of the paint sprayer 1014. The sprayer transfer connector 1166 can selectively and removably couple to the transfer hose 1022 (FIG. 15), which can fluidly couple the sprayer transfer connector 1166 to an external source of the spray liquid such as the paint can 1038.

The pump 1082 may be operated in the reverse mode to draw spray liquid from the paint can 1038 into the reservoir 1086. Specifically, the spray liquid moves from the paint can 1038 to the reservoir 1086 via the transfer hose 1022, the sprayer transfer connector 1166, the third passageway 1162, the pump 1082 via the second inlet 1094 to the first inlet 1090, the first passageway 1126, and the coupler receptacle 1122. Alternatively, the pump 1082 may be operated in the forward mode to empty the reservoir 1086 and expel the spray liquid out of the paint sprayer 1014 via the sprayer transfer connector 1166 along a similar pathway. The spray liquid exiting via the sprayer transfer connector 1166 can move through the transfer hose 1022 and flow back into the paint can 1038, or to another external container.

With reference to FIG. 22, the nozzle assembly 1058 includes a valve assembly 1274 having a valve body 1278 that defines the second passageway 1158 by which the spray liquid enters the nozzle assembly 1058 from the outlet 1096. The valve assembly 1274 also includes a shut-off valve 1286 which includes a plunger 1290, a ball 1294 supported at a forward end of the plunger 1290, and a ball seat 1298 in facing relationship with the ball 1294. The plunger 1290 is biased by a spring 1302 toward a closed position with the ball 1294 seated against the ball seat 1298.

During operation of the paint sprayer 1014, the spray liquid flows through the second passageway 1158 and enters an annular space 1310 defined within the ball seat 1298 and the valve body 1278. The spray liquid within the annular space 1310 is pressurized due to the operation of the pump 1082 and exerts a force on the forward end of the plunger 1290, causing the plunger 1290 to retract against the biasing force of the spring 1302 and away from the ball seat 1298 to an open position. The spray liquid then flows through an opening in the ball seat 1298 and into the nozzle assembly 1058.

With continued reference to FIG. 22, the valve assembly 1274 also includes a pressure-release button 1314 that is actuable to manually retract the plunger 1290 to the open position (e.g., to facilitate cleaning the valve assembly 1274 and the nozzle assembly 1058). The pressure-release button 1314 is substantially the same in both structure and function as the pressure-release button 314 described herein.

The nozzle assembly 1058 includes a nozzle body 1330 having internal threads that removably tighten to external threads on the valve body 1278. The nozzle body 1330 defines a guard portion 1334 and a cylindrical receptacle 1346 that receives a removable and adjustable spray tip 1338. The spray tip 1338 is substantially similar to the spray tip 338 described herein. Like the spray tip 338, the spray tip 1338 can be removed from the receptacle 1346, e.g., for cleaning or to be replaced with another spray tip. The spray tip 1338 can also be rotated 180 degrees within the receptacle 1346 for cleaning, as described herein with respect to the spray tip 338.

With reference to FIG. 16, the transfer hose 1022 includes a primary hose segment 1170 and a hose transfer coupler 1174 coupled to the primary hose segment 1170. The hose transfer coupler 1174 includes a hose transfer connector 1178 fluidly connected to a manifold 1650. The hose transfer connector 1178 selectively connects to the sprayer transfer connector 1166 to fluidly connect the primary hose segment 1170 to the paint sprayer 1014.

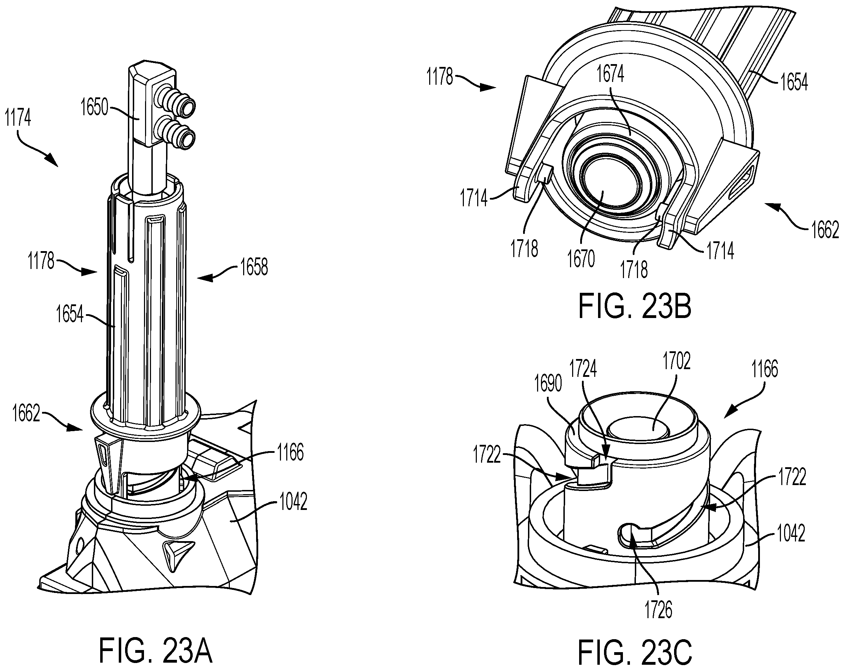

FIGS. 23A-25 illustrate the hose transfer connector 1178 and the sprayer transfer connector 1166. The hose transfer connector 1178 includes a handle 1654 defining a hollow interior, a grip portion 1658 and a connector portion 1662. A hose valve assembly 1666 is positioned within the handle 1654 and fluidly coupled to the primary hose segment 1170.

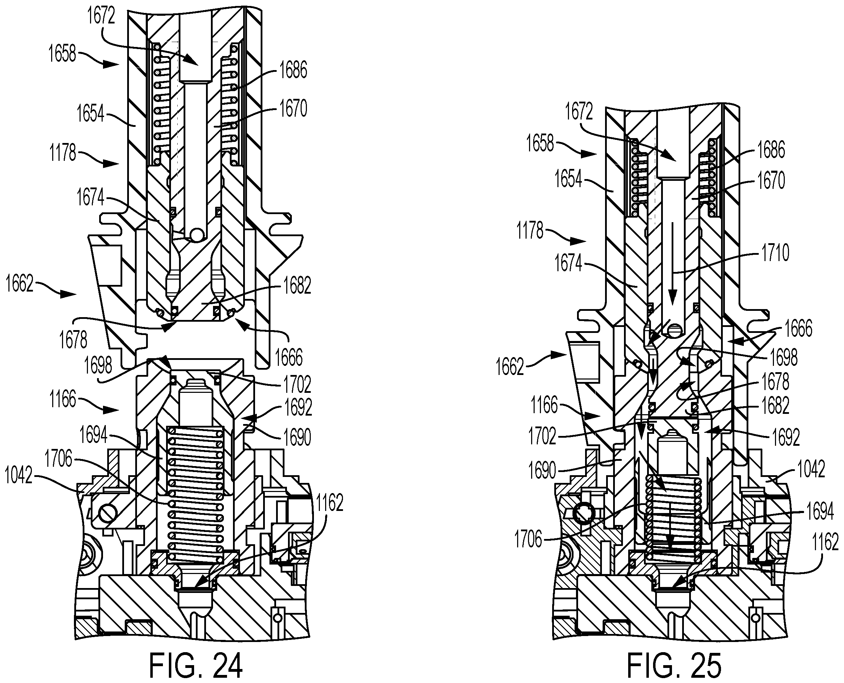

The hose transfer connector 1178 also includes a hose valve stem 1670 that is axially immovably secured within the handle 1654. The hose valve stem 1670 internally defines a hose stem passageway 1672 which is fluidly connected to the manifold 1650. The manifold 1650 fluidly connects the hose valve stem 1670 to the primary hose segment 1170. The hose transfer connector 1178 also includes an annular hose valve body 1674 disposed concentrically around the hose valve stem 1670 and within the handle 1654. The hose valve body 1674 defines an orifice 1678 that is normally closed by a hose stem head 1682 of the hose valve stem 1670. The hose valve body 1674 is slidably disposed about the hose valve stem 1670 and biased by a hose valve spring 1686 toward a forward, closed position (FIG. 24) at which the hose stem head 1682 closes the orifice 1678.

The sprayer transfer connector 1166 includes a connector body 1690 and a sprayer valve assembly 1692. The connector body 1690 is annular and defines a hollow interior and is secured to the housing 1042. The connector body 1690 is also fluidly connected to the third passageway 1162 and to the second inlet 1094 of the pump 1082. The connector body 1690 defines an orifice 1698. The sprayer valve assembly 1692 includes a sprayer valve stem 1694 having a sprayer stem head 1702 that normally closes the orifice 1698 of the sprayer valve stem 1694. The sprayer valve stem 1694 is slidably disposed within the connector body 1690 and is biased by a sprayer valve spring 1706 toward a forward, closed position (FIG. 24) at which the sprayer stem head 1702 closes the orifice 1698.

As shown in FIG. 25, when the hose transfer connector 1178 is connected to the sprayer transfer connector 1166, the connector body 1690 presses against the hose valve body 1674, causing the hose valve body 1674 to retract to an open position at which the hose stem head 1682 no longer blocks the orifice 1678. The spray liquid is then permitted to flow through the orifice 1678 into or out from the hose valve stem 1670. Likewise, the hose stem head 1682 presses against the sprayer stem head 1702, causing the sprayer valve stem 1694 to retract to an open position at which the sprayer stem head 1702 no longer blocks the orifice 1698. The spray liquid is then permitted to flow through the orifice 1698 into or out from the connector body 1690. Thus, a flow pathway 1710, illustrated by the arrows in FIG. 25, extends from the hose stem passageway 1672, through the orifice 1678 of the hose valve body 1674, through the orifice 1698, and through the connector body 1690 (passing through openings in the sprayer valve stem 1694), and into the third passageway 1162. The spray liquid can flow along the flow pathway 1710 in either direction.

With reference to FIG. 23B, the connector portion 1662 of the handle 1654 includes two mounting tabs 1714 positioned about 180 degrees apart from one another and protruding in both the axial and radial directions. Each mounting tab 1714 defines a lug 1718 which protrudes radially inward from an inner surface of the mounting tab 1714. With reference to FIG. 23C, the connector body 1690 defines two helical grooves or channels 1722 in its outer circumferential surface. Each channel 1722 includes an opening 1724 at its axially distal end and includes an axially extending notch 1726 at its opposite, proximal end.

As the hose transfer connector 1178 is coupled to the sprayer transfer connector 1166, the lugs 1718 are received into the respective channels 1722 via the openings 1724. Then the handle 1654 is rotated (e.g., clockwise), causing the lugs 1718 to traverse the channels 1722, which pulls the hose stem head 1682 toward the sprayer stem head 1702 and causes both the hose valve assembly 1666 and the sprayer valve assembly 1692 to open. When the lugs 1718 reach proximal end of the channels 1722, the lugs 1718 are received into the notches 1726 and held therein under the spring force of the hose valve spring 1686 and the sprayer valve spring 1706. The hose transfer connector 1178 is thereby selectively secured to the sprayer transfer connector 1166, and the paint sprayer 1014 can be loaded or unloaded with the spray liquid via the transfer hose 1022.

Referring again to FIG. 19, the paint sprayer 1014 also includes a control system 1206 for controlling various operations of the paint sprayer 1014. The control system 1206 includes an electronic controller 1210 supported within the main portion 1066 of the housing 1042. The controller 1210 controls the operation of the paint sprayer 1014 according to three operation modes including a load mode, an unload mode, and a spray mode. The paint sprayer 1014 is operable in the load mode and in the unload mode when the hose transfer connector 1178 is coupled to the sprayer transfer connector 1166. The paint sprayer 1014 is operable in the spray mode when the hose transfer connector 1178 is disconnected from the sprayer transfer connector 1166.

In the load mode and the unload mode, the hose transfer connector 1178 is connected to the sprayer transfer connector 1166 and the valve assemblies 1666, 1692 of the connectors 1166, 1178 are open. When the paint sprayer 1014 is operated in the load mode, the motor 1046 operates in the reverse rotational direction and the pump 1082 operates in the reverse mode to draw spray liquid in through the sprayer transfer connector 1166 (i.e., via the transfer hose 1022 inserted into the external container) and direct the spray liquid into the reservoir 1086 to fill the reservoir 1086. When the paint sprayer 1014 is operated in the unload mode, the motor 1046 operates in the forward rotational direction and the pump 1082 operates in the forward mode to draw the spray liquid out of the reservoir 1086 and expel the spray liquid out through the sprayer transfer connector 1166 (i.e., and into the external container via the transfer hose 1022). In the spray mode, the sprayer transfer connector 1166 is disconnected from the hose transfer connector 1178 and the sprayer valve assembly 1692 within the sprayer transfer connector 1166 is closed. When the paint sprayer 1014 is operated in the spray mode, the motor 1046 operates in the forward rotational direction and the pump 1082 operates in the forward mode to draw the spray liquid out of the reservoir 1086 and direct the spray liquid through the nozzle assembly 1058 to perform a paint spraying operation or a cleaning operation.

With reference to FIGS. 18, 19, and 26, the paint sprayer 1014 includes a barbed anchor 1728 located toward a rear end 1730 of the second internal space 1130 on one lateral side thereof. The control system 1206 also includes a reservoir installed sensor 1754 in electrical communication with the controller 210 and operable to detect when the reservoir 1086 is installed. The reservoir installed sensor 1754 is also located toward the rear end 1730 of the second internal space 1130 on another lateral side opposite from the barbed anchor 1728. The reservoir installed sensor 1754 includes a barbed plunger 1756 that is retractable from an extended position to a retracted position, and spring-biased toward the extended position. When the reservoir 1086 is installed in the paint sprayer 1014, the barbed anchor 1728 and the barbed plunger 1756 are received into respective apertures (not shown) defined in rear flap portions of the reservoir 1086 and held therein by their respective barbs. The 1086 is therefore anchored within the second internal space 1130 at three points, namely, the rigid coupler 1114, the barbed anchor 1728, and the barbed plunger 1756 of the reservoir installed sensor 1754. When the barbed plunger 1756 is coupled to the flap of the reservoir 1086, the barbed plunger 1756 is pulled outward to the extended position against the bias of the spring. The barbed plunger 1756 actuates a switch 1738 to signal the controller 1210 that the reservoir 1086 is installed. When the reservoir 1086 is removed, the barbed plunger 1756 retracts, and the switch 1738 signals the controller that the reservoir 1086 is removed.

In response to receiving the signal from the full reservoir sensor 1762 indicating that the reservoir 1086 is full, the controller 1210 can disable operation of the motor 1046 to prevent the reservoir 1086 from being over-filled and breaking. In some embodiments, the signal from the full reservoir sensor 1762 may only be sent to the controller 1210 when the paint sprayer 1014 is in the load mode. In some embodiments, in response to receiving the signal indicating that the reservoir 1086 is full, the controller 1210 can actuate an indicator (not shown), such as an LED, to inform a user that the reservoir is full. The controller 1210 can turn off such indication when it is no longer receiving the signal.

With reference to FIGS. 19, 21, and 27, the control system 1206 also includes an empty reservoir sensor 1226 in electrical communication with the controller 1210 and operable to detect when the reservoir 1086 is empty. In the illustrated embodiment, the empty reservoir sensor 1226 detects a low pressure within the first passageway 1126 which is indicative of the reservoir 1086 being empty when the pump 1082 is operating in the forward mode corresponding to the spray mode or the unload mode. The empty reservoir sensor 1226 includes an optical sensor 1232 and one or more permanent magnets 1234. The empty reservoir sensor 1226 also includes a diaphragm 1742 coupled to a plunger 1746. The diaphragm 1742 fluidly communicates with the first passageway 1126. In some embodiments, the empty reservoir sensor 1226 further includes a biasing member 1750, such as a spring, which biases the diaphragm 1742 away from the first passageway 1126.

In response to a low pressure of the spray liquid within the first passageway 1126, the diaphragm 1742 stretches toward the first passageway 1126, causing the plunger 1746 to move. The plunger 1746 moves relative to the optical sensor 1232, causing the optical sensor 1232 to send a signal to the controller 1210 indicative that the reservoir 1086 is empty. In other words, when the pump 1082 is operating in the forward mode and the reservoir 1086 reaches an empty state, a low pressure develops within the first passageway 1126. The vacuum sensor 1226 detects the low pressure within the first passageway 1126 and in response, communicates the signal to the controller 1210 indicating that the reservoir 1086 is empty. In response to receiving the signal indicating that the reservoir 1086 is empty, the controller 1210 can disable operation of the motor 1046 to prevent the pump 1082 from running dry. In some embodiments, the signal from the empty reservoir sensor 1226 may only be sent to the controller 1210 when the paint sprayer 1014 is in the unload mode or the spray mode. In some embodiments, in response to receiving the signal indicating that the reservoir 1086 is empty, the controller 1210 can actuate an indicator, such as an LED (not shown), to inform a user that the reservoir is empty. The controller 1210 can turn off such indication when it is no longer receiving the signal.

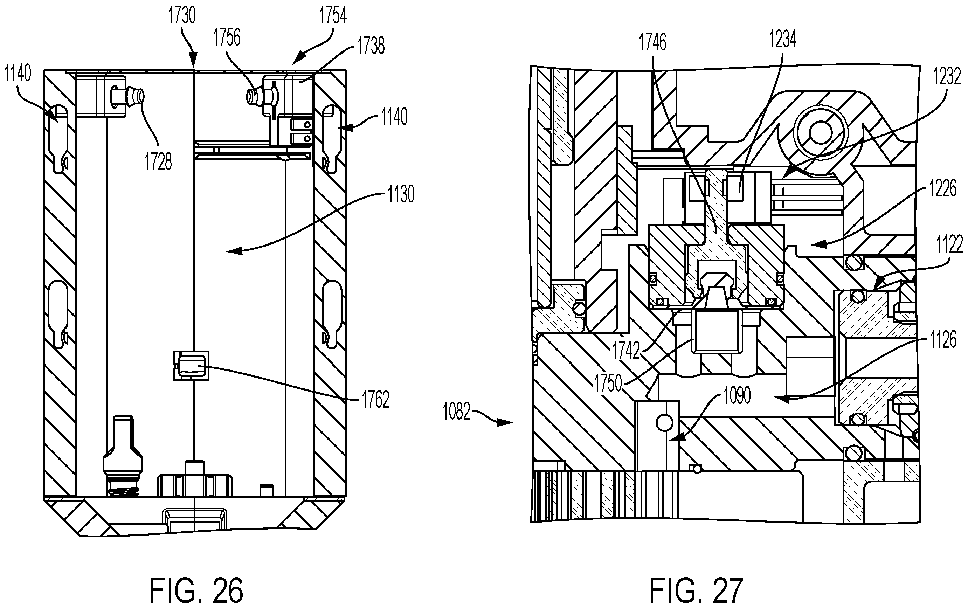

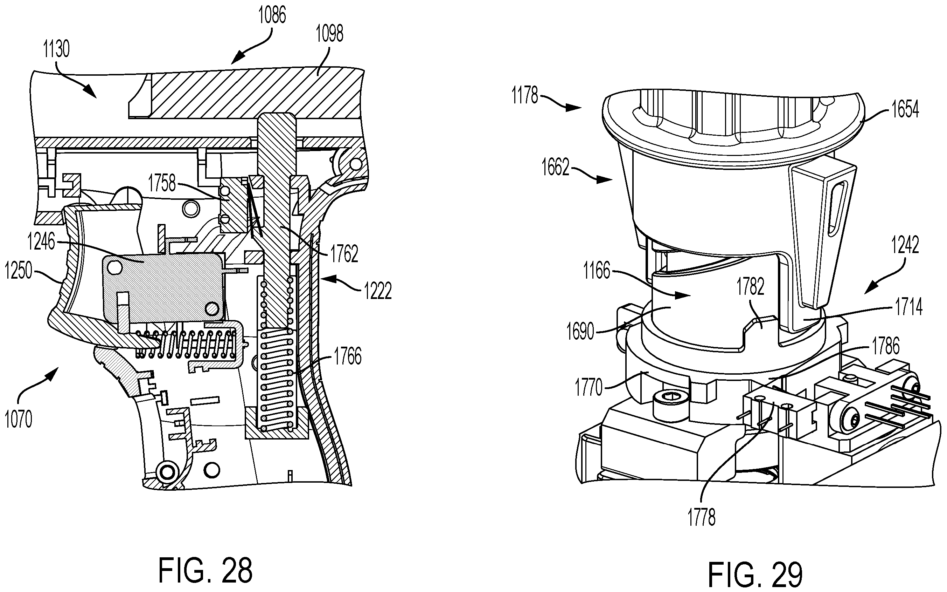

With reference to FIGS. 26 and 28, the control system 1206 also includes a full reservoir sensor 1222. The full reservoir sensor 1222 detects when the reservoir 1086 is full. The full reservoir sensor 1222 includes a switch 1758, a plunger 1762, and a spring 1766. The spring 1766 biases the plunger 1762 toward the second internal space 1130 such that a portion of the plunger 1762 protrudes into the second internal space 1130 when the reservoir 1086 is not full. When the reservoir 1086 is installed in the second internal space 1130, the collapsible portion 1098 of the reservoir 1086 when full presses against the plunger 1762 such that the plunger 1762 retracts. In the retracted state, the plunger 1762 engages the switch 1758, causing the switch 1758 to communicate a signal to the controller 1210 indicating that the reservoir 1086 is full.

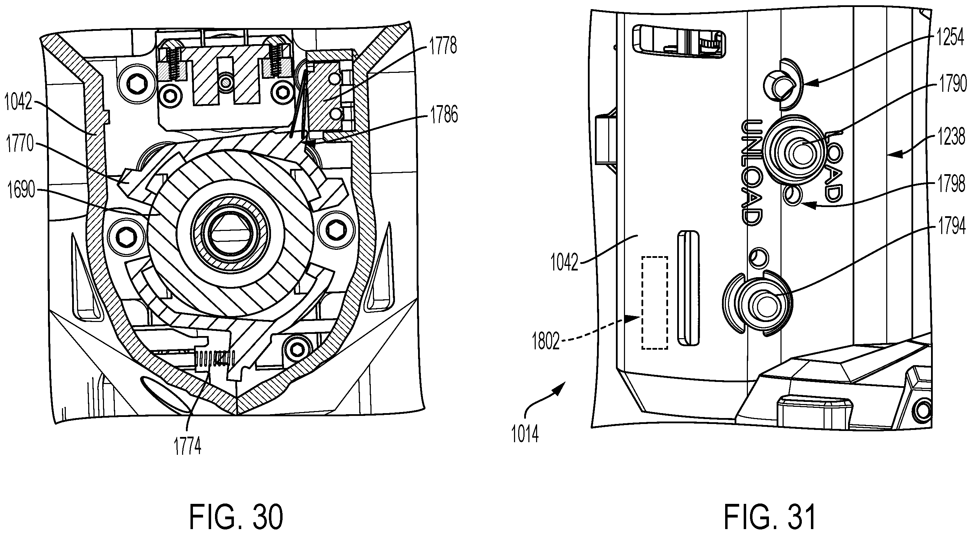

With continued reference to FIGS. 29 and 30, the control system 1206 also includes a transfer connection sensor 1242 that detects when the hose transfer connector 1178 is connected to the sprayer transfer connector 1166. The transfer connection sensor 1242 includes a collar 1770 positioned concentrically about the connector body 1690 and rotatable relative to the connector body 1690 between a disengaged, or unactuated, position (not shown), and an engaged, or actuated, position (FIGS. 29 and 30). The transfer connection sensor 1242 also includes a biasing member or spring 1774 which biases the collar 1770 toward the unactuated position. The transfer connection sensor 1242 further includes a switch 1778 electrically connected to the controller 1210.

With reference to FIG. 29, the collar 1770 includes a first leg or tab 1782. The collar 1770 also includes a second leg or tab 1786 that is located proximate the switch 1778. As the hose transfer connector 1178 is coupled to the sprayer transfer connector 1166, the mounting tab 1714 engages and pushes the tab 1782, causing the collar 1770 to rotate from the unactuated position to the actuated position. In the actuated position of the collar 1770, the tab 1786 engages and actuates the switch 1778. This causes the switch 1778 to communicate a signal to the controller 1210 indicating that the hose transfer connector 1178 is connected to the sprayer transfer connector 1166. In response to the signal, the controller 1210 may disable the spray mode and may limit the speed of the motor 1046. In the absence of the signal, the controller 1210 may disable the load and/or unload modes.

With reference to FIG. 31, the paint sprayer 1014 further includes a mode selection switch 1238 incorporated into the control system 1206. The mode selection switch 1238 is electrically coupled to the controller 1210 and operable to switch the operation mode of the paint sprayer 1014. In the illustrated embodiment, the mode selection switch 1238 includes a first mode selection button 1790 and a second mode selection button 1794. The first mode selection button 1790 is operable to place the paint sprayer 1014 in the load mode and in the spray mode. For example, when the hose transfer connector 1178 is connected to the sprayer transfer connector 1166 and the first mode selection button 1790 is pressed, the controller 1210 places the paint sprayer 1014 in the load mode. When the hose transfer connector 1178 is not connected and the first mode selection button 1790 is pressed, the controller 1210 places the paint sprayer 1014 in the spray mode. When the hose transfer connector 1178 is connected to the sprayer transfer connector 1166 and the second mode selection button 1794 is pressed, the controller 1210 places the paint sprayer 1014 in the unload mode. The mode selection switch 1238 also includes two indicators 1798 corresponding to the two respective buttons 1790, 1794. The indicators 1798 can be, e.g., LED indicators and can indicate to the user whether the first mode selection button 1790 or the second mode selection button 1794 was last pressed, or whether the paint sprayer 1014 is in the load mode or the unload mode (or, the spray mode).

The control system 1206 also includes a variable speed selector 1254. The selector 1254 is actuated by a dial and is operable to adjust a speed of the motor 1046, e.g., by varying the duty cycle of the motor 1046 via, e.g., pulse width modulation. By varying the speed of the motor 1046, a flow rate and pressure of the spray liquid discharged from the pump 1082 can be varied. In the illustrated embodiment, the selector 1254 may only be operable in the spray mode, to vary a flow rate, pressure, and/or spray pattern of the spray liquid discharged from the nozzle assembly 1058. In the load mode and the unload mode, however, the speed of the motor 1046 may be limited and may not be varied by adjusting the selector 254. This can be done for reasons of safety, i.e., to prevent spillage, splashing, or splatter while unloading the spray liquid from the reservoir 1086, or to prevent damage to the reservoir 1086 during loading.

With continued reference to FIG. 31, the paint sprayer 1014 also includes an indicator panel 1802 operable to indicate information about the paint sprayer 1014 to the user. For example, the indicator panel 1802 may indicate such information as, e.g., a setting of the variable speed selector 1254.

With reference to FIG. 28, the control system 1206 further includes a trigger switch 1246 operable to communicate an ON or OFF signal to the controller 1210. In response to the ON signal, the controller 1210 may activate the motor 1046. The trigger switch 1246 can be incorporated into the trigger assembly 1070 and may be actuated by a trigger 1250 of the trigger assembly 1070.

### The Painting System

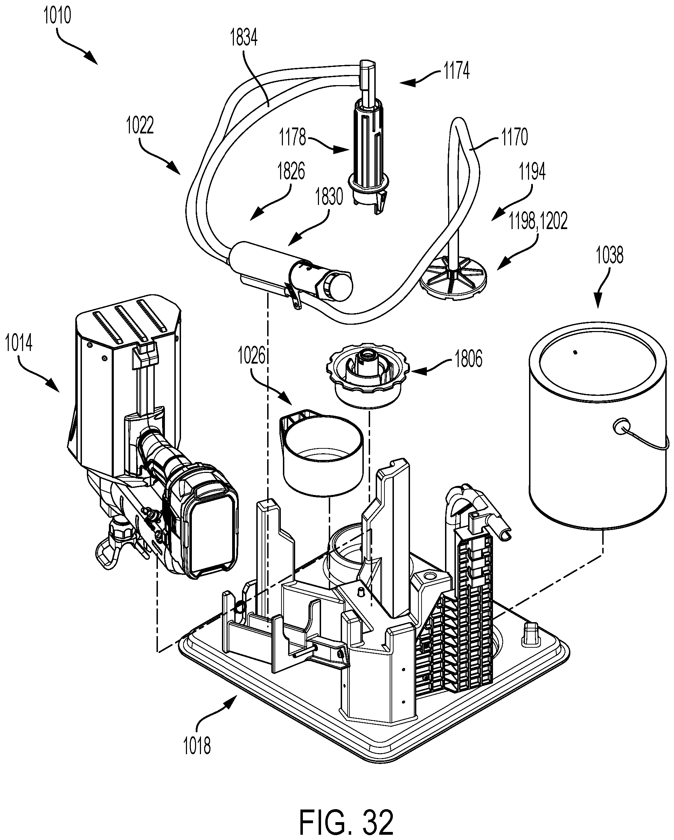

FIGS. 32-39 illustrate all or portions of the painting system 1010 in further detail. As described herein, the painting system 1010 includes the paint sprayer 1014, the base assembly 1018, the transfer hose 1022, a container 1026, and a removable mount 1806 for the hose transfer connector 1178. The painting system 1010 is also operable with the paint can 1038, which can be of different sizes and can contain a paint material, stain material, a solvent material, a preservative material, or other spray liquids.

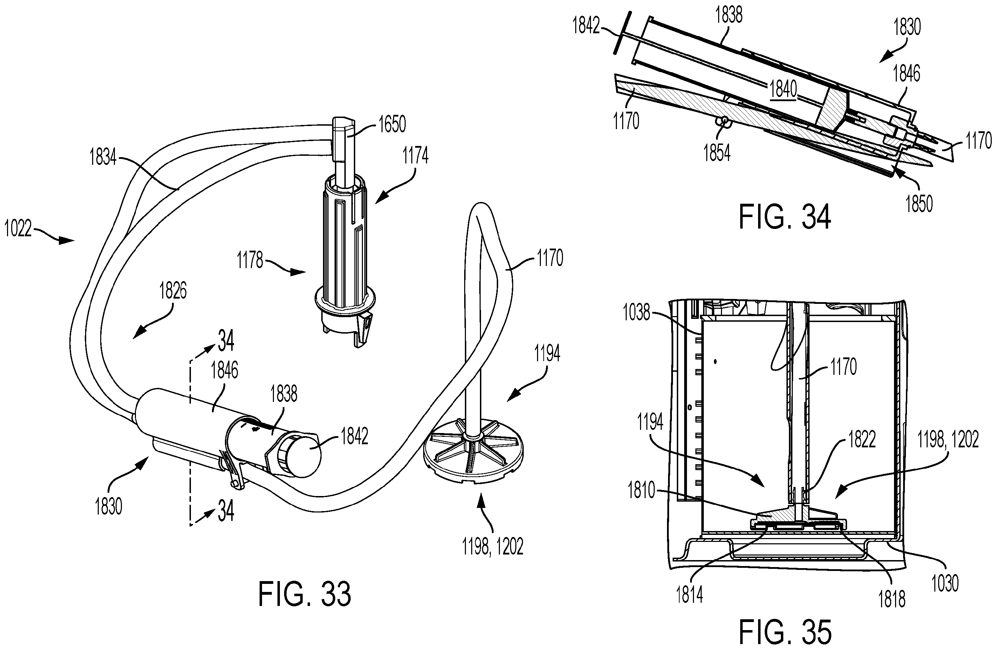

FIGS. 33-35 illustrate all or portions of the transfer hose 1022 in greater detail. The transfer hose 1022 includes a weight member 1198 located at a distal end 1194 of the primary hose segment 1170 opposite from the hose transfer coupler 1174. The weight member 1198 is configured to be positioned in a container containing the spray liquid, such as the paint can 1038. The weight member 1198 may be formed from a material having a greater density than that of the spray liquid, so that the weight member 1198 will tend to sink toward the bottom of the container and remain submerged in the spray liquid.

In the illustrated embodiment, the weight member 1198 is formed as a filter assembly 1202 which includes a filter body 1810, a filter screen 1814, and a retaining clip 1818 (e.g., a circlip) which retains the filter screen 1814 within the filter body 1810. The filter screen 1814 may be removed and replaced by removing the retaining clip 1818 from the filter body 1810. The filter body 1810 fluidly couples to the primary hose segment 1170 at the distal end 1194 via barbed plug 1822.

The transfer hose 1022 also includes a priming mechanism 1826 connected to the manifold 1650 of the hose transfer coupler 1174. When the paint sprayer 1014 is initially operated, and there is not yet spray liquid within the pump 1082, the pump 1082 may first need to be primed with spray liquid to become operable. The priming mechanism 1826 includes a syringe assembly 1830 and a priming hose segment 1834 fluidly connecting the syringe assembly 1830 to the manifold 1650.

With reference to FIGS. 33 and 34, the syringe assembly 1830 includes a barrel 1838 fluidly coupled to the priming hose segment 1834, and a plunger 1842 disposed within the barrel 1838. The barrel 1838 and the plunger 1842 define a priming chamber 1840 having a variable volume which changes as the plunger 1842 moves into or out of the barrel 1838. The spray liquid can be drawn into the priming chamber 1840 and subsequently forced out of the priming chamber 1840 toward the pump 1082 of the paint sprayer 1014 to prime the pump 1082, as will be explained herein. The syringe assembly 1830 also includes a syringe housing 1846 that receives and holds the barrel 1838. The syringe housing 1846 also defines a hose channel 1850 that receives and holds a portion of the primary hose segment 1170. The syringe housing 1846 also includes a shaft segment or rod 1854 located proximate the hose channel 1850. The rod 1854 provides a surface for pinching the primary hose segment 1170 to selectively prevent the spray liquid from flowing through the primary hose segment 1170 during a priming operation. In other embodiments (not shown), rather than pinching the primary hose segment 1170, the primary hose segment 1170 may be selectively blocked by another means, such as an inline shut-off valve (not shown).

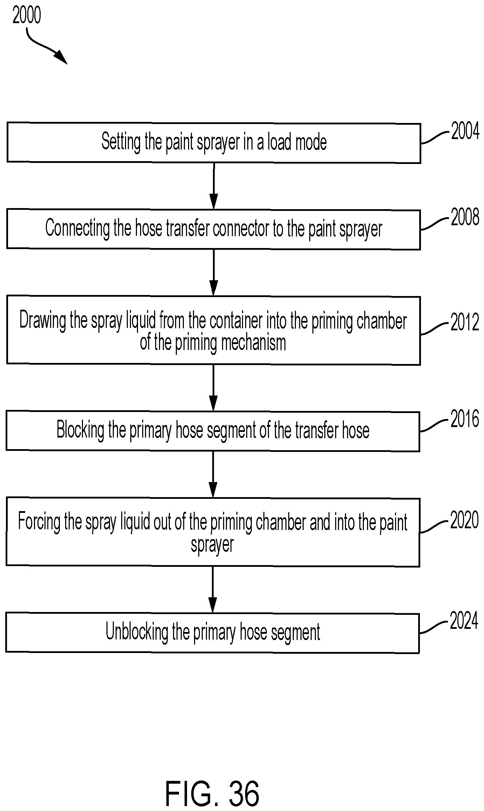

FIG. 36 illustrates a method 2000 of priming the paint sprayer 1014 via transfer hose 1022 with the priming mechanism 1826. At step 2004, the paint sprayer 1014 is placed in the load mode via the mode selection switch 1238. At step 2008, the hose transfer connector 1178 is connected to the sprayer transfer connector 1166. The distal end 1194 of the primary hose segment 1170 is also submerged in a container containing spray liquid (e.g., the paint can 1038). At step 2012, spray liquid is drawn into the priming chamber 1840 of the syringe assembly 1830. This is done by pulling the plunger 1842 out from the barrel 1838, which suctions the spray liquid into the barrel 1838. Specifically, the spray liquid flows from the container into the primary hose segment 1170, from the primary hose segment 1170 to the manifold 1650, from the manifold 1650 to the priming hose segment 1834, and from the priming hose segment 1834 into the barrel 1838. Alternatively, steps 2008 and 2012 can be performed in reverse order. Specifically, the spray liquid can first be drawn into the priming chamber 1840 (with the distal end 1194 submerged in the container) with the hose transfer connector 1178 not yet connected to the sprayer transfer connector 1166, and then the hose transfer connector 1178 can subsequently be connected to the sprayer transfer connector 1166.

Next, at step 2016, with the priming chamber 1840 filled with the spray liquid, the primary hose segment 1170 is then blocked to prevent the spray liquid from flowing therethrough. The primary hose segment 1170 can be blocked by pinching the primary hose segment 1170. For example, the primary hose segment 1170 can be wrapped backward tightly around the rod 1854 of the syringe housing 1846 to pinch the primary hose segment 1170. Next, at step 2020, the spray liquid is then forced out of the priming chamber 1840 and into the pump 1082 while the primary hose segment 1170 is maintained in a blocked or pinched state. Specifically, the plunger 1842 is pushed back into the barrel 1838, which forces the spray liquid out of the priming chamber 1840 and into the priming hose segment 1834. The spray liquid flows from the priming hose segment 1834 into the manifold 1650, and because the primary hose segment 1170 is being held blocked, the spray liquid flows from the manifold 1650 into the hose transfer connector 1178, the sprayer transfer connector 1166, and finally, into the pump 1082 via the second inlet 1094 (FIG. 21). The pump 1082 is then primed and the primary hose segment 1170 can be unblocked (step 2024). Any remaining excess spray liquid within the priming chamber 1840 can be forced out, e.g., by pressing the plunger 1842 the rest of the way into the barrel 1838. Remaining spray liquid exiting the priming chamber 1840 will flow back through the primary hose segment 1170 once it has been unblocked, and back into the container. The reservoir 1086 can then be loaded by pressing the trigger assembly 1070 to operate the primed pump 1082.

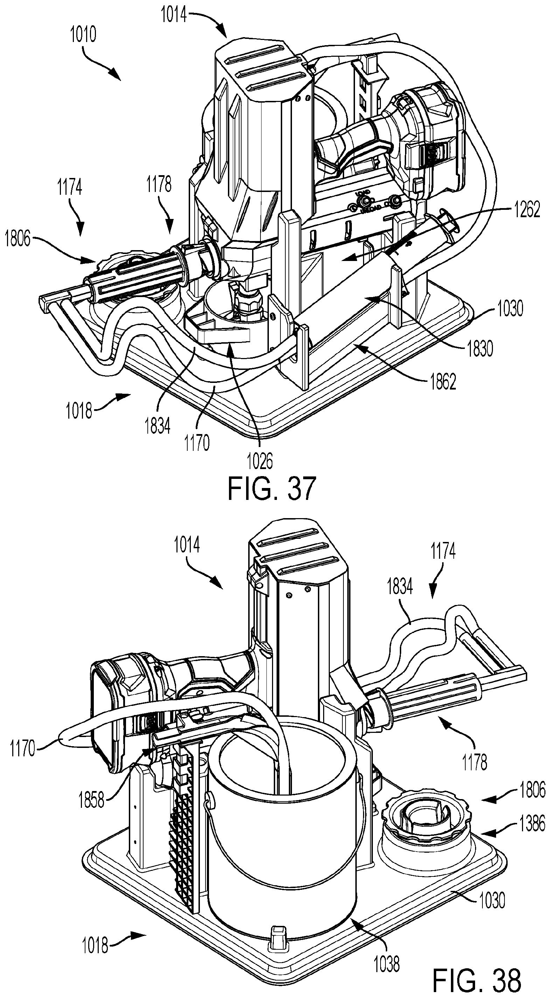

FIGS. 37 and 38 illustrate the painting system 1010 with the paint sprayer 1014, the transfer hose 1022, the paint can 1038, the container 1026, and the mount 1806 supported on the base assembly 1018. The distal end 1194 including the filter assembly 1202 is submerged in the paint can 1038 and the hose transfer connector 1178 is connected to the sprayer transfer connector 1166. The painting system 1010 is thus arranged to operate in the load mode to fill the reservoir 1086, the unload mode to empty the reservoir 1086, or to perform the priming method 2000 to prime the pump 1082.

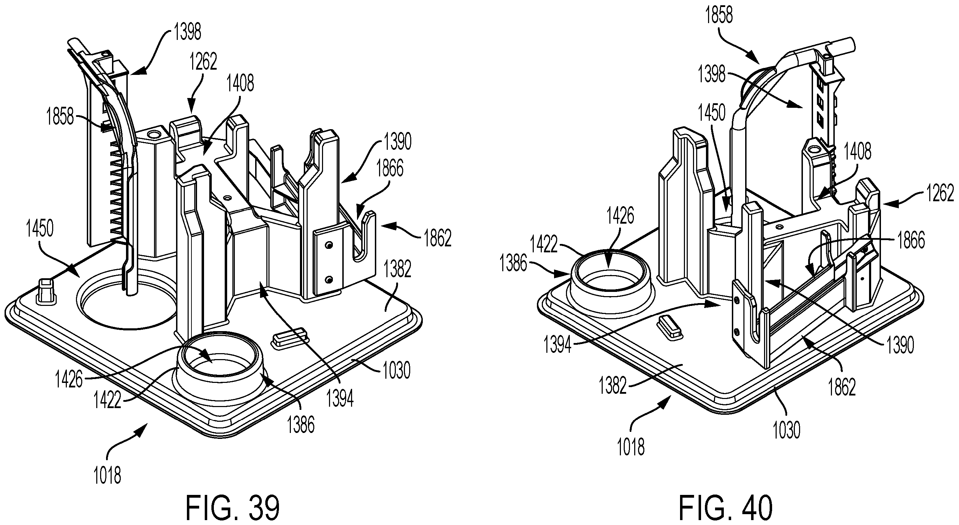

With reference to FIGS. 39 and 40, the base 1030 includes a base wall 1382, a first support portion 1262, a second support portion 1386, a third support portion 1390, a fourth support portion 1450, and a container receptacle 1394. Each of the first, second, third, and fourth support portions 1262, 1386, 1390, 1450, and the container receptacle 1394, may be coupled to the base wall 1382, or, alternatively, may be integrally formed with the base wall 1382.

The base 1030 also includes a hose guide mount 1398 coupled to the base wall 1382 that may assist the user to holding the hose in the proper position and adjusting the vertical position of the hose. The base assembly 1018 further includes a hose guide 1858 that removably couples to the hose guide mount 1398. The hose guide 1858 is rigid and elongated and defines a hose receiving channel which receives the distal end 1194 of the primary hose segment 1170. When the paint can 1038 or other container is received in the fourth support portion 1450, the hose guide 1858 conveniently holds the distal end 1194 in the container.

The first support portion 1262 defines a first receptacle 1408 that removably receives and supports the paint sprayer 1014 in the orientation illustrated in FIGS. 37 and 38, with the spray tip 1338 positioned within the container 1026 held in the container receptacle 1394, with the spray tip 1338 pointing downward. The container 1026 thus captures drips of the spray liquid that may drip from the spray tip 1338. The container 1026 can be filled with water, mineral solvent, or another material that can help prevent drying or hardening of the spray liquid in the paint sprayer 1014 (e.g., in the spray tip 1338).

The first support portion 1262 supports the weight of the paint sprayer 1014 with the spray tip 1338 oriented downward and suspended within the container 1026. This orientation ensures safety and minimizes spills during loading or unloading of the spray liquid into or out of the reservoir 1086 (i.e., when operating the paint sprayer in the load mode or the unload mode). When supported in this way, the user will not have to hold the paint sprayer 1014 during these operations. This leaves the user's hands free to perform other steps of the loading and unloading processes.

In the illustrated embodiment, the second support portion 1386 includes a raised circular wall 1422 protruding upward from the base wall 1382 and defining a second receptacle 1426 for removably receiving the mount 1806. The mount 1806 receives and holds the hose transfer coupler 1174 when it is not connected to the paint sprayer 1014. Any spray liquid which spills from the hose transfer coupler 1174 is captured by the mount 1806, and the mount 1806 can be removed from the second receptacle 1426 for easy cleaning.

The third support portion 1390 provides a mounting surface to which a priming stand 1862 is mounted. The priming stand 1862 defines a priming receptacle 1866 which selectively receives and holds the syringe assembly 1830. The priming stand 1862 makes it easier for the user to actuate the plunger 1842 with one hand and pinch the primary hose segment 1170 with the other hand during the pump priming process.

Like the paint sprayer 14 discussed herein, in some embodiments, the paint sprayer 1014 can include a tool support sensor (not shown) operable to detect when the paint sprayer 1014 is properly positioned in the first support portion 1262 of the base 1030. In other embodiments, the first support portion 1262 of the base 1030 can include the tool support sensor, rather than the paint sprayer 1014. The tool support sensor of the base 1030 can detect that the paint sprayer 1014 is properly supported on the first support portion 1262 and communicate a signal to the controller 1210 (e.g., via RFID, Bluetooth, WiFi, NFC, a wired communication, or other communication means). The controller 1210 will disable the spray mode in response to the signal.

Like the base 30 discussed herein, the base 1030 can further include a grounding connection (not shown) positioned on the first support portion 1262 so as to contact the grounding connection (not shown) of the paint sprayer 1014. Contact between the ground connections facilitates grounding of the paint sprayer 1014 to reduce a likelihood of arcing in the paint sprayer 1014 when loading or unloading. This improves safety of the painting system 1010, particularly when working with combustible fluids.

### Operation

Unless explicitly described otherwise, operation of the painting system 1010 and the paint sprayer 1014, including primary operation, cleaning operation, and mixing operation, is substantially the same as that described herein for the painting system 10 and the paint sprayer 14.

Although the disclosure has been described in detail with reference to certain preferred embodiments, variations and modifications exist within the scope and spirit of one or more independent aspects of the disclosure as described. For example, features and methods of the painting system 10 and paint sprayer 14 may be employed in the painting system 1010 and/or paint sprayer 1014, or vice versa.

### REPRESENTATIVE FEATURES

Representative features are set out in the following clauses, which stand alone or may be combined, in any combination, with one or more features disclosed in the text and/or drawings of the specification.

Clause 1. A paint sprayer comprising: a housing enclosing an internal space; a nozzle assembly coupled to the housing; a pump assembly fluidly coupled to the nozzle assembly and positioned within a first region of the internal space; and a reservoir fluidly coupled to the pump assembly and configured to hold a spray liquid, the reservoir being positioned within a second region of the internal space.

Clause 2. The paint sprayer of any of the preceding clauses, wherein the housing comprises a first clamshell member and a second clamshell member, and wherein the second region of the internal space is at least partially defined between the first and second clamshell members.

Clause 3. The paint sprayer of any of the preceding clauses, wherein the housing further comprises a cover member coupled to the first and second clamshell members, and wherein the cover member partially defines the second region of the internal space.

Clause 4. The paint sprayer of any of the preceding clauses, wherein the second region is entirely enclosed by the first clamshell member, the second clamshell member, and the cover member.

Clause 5. The paint sprayer of any of the preceding clauses, wherein the reservoir is collapsible such that a first internal volume of the reservoir in a filled state is greater than a second internal volume of the reservoir in an empty state.

Clause 6. The paint sprayer of any of the preceding clauses, wherein the housing includes a divider wall that separates the first region from the second region.

Clause 7. The paint sprayer of any of the preceding clauses, further comprising a transfer coupler configured to couple to an external source of the spray liquid and to supply the spray liquid to the reservoir via the pump assembly.

Clause 8. The paint sprayer of any of the preceding clauses, wherein the reservoir is selectively removable from the internal space.

Clause 9. The paint sprayer of any of the preceding clauses, further comprising: an electronic controller configured to control operation of the pump assembly; and a sensor electrically connected to the electronic controller and configured to detect the reservoir within the internal space; wherein the electronic controller disables the pump assembly in response to a signal from the sensor indicating that the reservoir is not within the internal space.

Clause 10. A paint sprayer comprising: a housing; a nozzle assembly coupled to the housing; a pump assembly positioned within the housing and fluidly coupled to the nozzle assembly; and a collapsible reservoir fluidly coupled to the pump assembly and configured to hold a spray liquid, the collapsible reservoir including a flexible sidewall and defining a variable internal volume; wherein the collapsible reservoir is movable between a filled state and a partially emptied state, wherein the collapsible reservoir defines a first internal volume in response to being in the filled state and defines a second internal volume in response to being in the partially emptied state, and wherein the second internal volume is less than fifty percent of the first internal volume.

Clause 11. The paint sprayer of any of the preceding clauses, wherein the housing encloses an internal space, wherein the pump assembly is positioned within a first region of the internal space, and wherein the collapsible reservoir is positioned within a second region of the internal space.

Clause 12. The paint sprayer of any of the preceding clauses, wherein the housing includes a divider wall that separates the first region from the second region.

Clause 13. The paint sprayer of any of the preceding clauses, wherein the collapsible reservoir further includes a rigid coupler affixed to the flexible sidewall.

Clause 14. The paint sprayer of any of the preceding clauses, further comprising a transfer coupler configured to couple to an external source of the spray liquid and to supply the spray liquid to the collapsible reservoir via the pump assembly.

Clause 15. The paint sprayer of any of the preceding clauses, wherein the housing includes a first clamshell member, a second clamshell member, and a cover member, and wherein the collapsible reservoir is enclosed within an internal space bounded by the first clamshell member, the second clamshell member, and the cover member.

Clause 16. A paint sprayer comprising: a housing; a nozzle assembly coupled to the housing; a pump assembly positioned within the housing and fluidly coupled to the nozzle assembly; and a collapsible reservoir fluidly coupled to the pump assembly and configured to hold a spray liquid, the collapsible reservoir including a flexible bag and a rigid coupler affixed to the flexible bag.

Clause 17. The paint sprayer of any of the preceding clauses, wherein the housing encloses an internal space, wherein the pump assembly is positioned within a first region of the internal space, and wherein the collapsible reservoir is positioned within a second region of the internal space.

Clause 18. The paint sprayer of any of the preceding clauses, wherein the collapsible reservoir is movable between a filled state and a partially emptied state, wherein the collapsible reservoir defines a first internal volume in response to being in the filled state and defines a second internal volume in response to being in the partially emptied state, and wherein the second internal volume is less than ninety percent of the first internal volume.

Clause 19. The paint sprayer of any of the preceding clauses, wherein the housing includes a first clamshell member, a second clamshell member, and a cover member, and wherein the collapsible reservoir is enclosed within an internal space bounded by the first clamshell member, the second clamshell member, and the cover member.

Clause 20. The paint sprayer of any of the preceding clauses, wherein the collapsible reservoir is selectively removable from the internal space.

Clause 21. A paint sprayer comprising: a housing; a nozzle assembly coupled to the housing; a pump assembly positioned within the housing and fluidly coupled to the nozzle assembly; a reservoir fluidly coupled to the pump assembly and configured to hold a spray liquid; and a transfer coupler fluidly coupled to the pump assembly and configured to selectively connect to an external source of the spray liquid; wherein the pump assembly is operable in a first mode to draw the spray liquid from the external source via the transfer coupler and fill the reservoir.

Clause 22. The paint sprayer of any of the preceding clauses, wherein the pump assembly is operable in a second mode to pump the spray liquid out of the reservoir and wherein in response to the transfer coupler being coupled to the external source of the spray liquid and the pump assembly being operated in the second mode, the spray liquid is pumped out of the reservoir and through the transfer coupler toward the external source.

Clause 23. The paint sprayer of any of the preceding clauses, wherein in response to the transfer coupler being uncoupled from the external source of the spray liquid and the pump assembly being operated in the second mode, the spray liquid is pumped out of the reservoir and through the nozzle assembly.

Clause 24. The paint sprayer of any of the preceding clauses, further comprising a valve assembly positioned downstream from the pump assembly and biased toward a closed position.

Clause 25. The paint sprayer of any of the preceding clauses, wherein the valve assembly is configured to open in response to a fluid pressure developed by the pump assembly exceeding a threshold pressure.

Clause 26. The paint sprayer of any of the preceding clauses, further comprising an electronic control unit and a transfer connection sensor configured to detect whether the transfer coupler is coupled to the external source of the spray liquid, wherein the electronic control unit is configured to regulate a speed of the pump assembly in response to a signal from the transfer connection sensor.

Clause 27. The paint sprayer of any of the preceding clauses, further comprising an electronic control unit and a full reservoir sensor configured to detect whether the reservoir is full of the spray liquid, wherein the electronic control unit is configured to disable operation of the pump assembly in response to a signal from the full reservoir sensor.

Clause 28. The paint sprayer of any of the preceding clauses, further comprising an electronic control unit and an empty reservoir sensor configured to detect whether the reservoir is empty, wherein the electronic control unit is configured to disable operation of the pump assembly in response to a signal from the empty reservoir sensor.

Clause 29. A paint sprayer comprising: a housing; a pump assembly positioned within the housing; and a nozzle assembly fluidly coupled to the pump assembly, the nozzle assembly including a spray tip defining an outlet orifice, a valve assembly positioned upstream from the outlet orifice and downstream from the pump assembly and biased toward a closed position, and an override actuator coupled to the valve assembly; wherein the valve assembly is configured to open in response to a fluid pressure developed by the pump assembly exceeding a threshold pressure; and wherein the override actuator is operable to open the valve assembly irrespective of the fluid pressure.

Clause 30. The paint sprayer of any of the preceding clauses, wherein the valve assembly includes a plunger, a valve seat, and a biasing member configured to bias the plunger toward the valve seat.

Clause 31. The paint sprayer of any of the preceding clauses, wherein the override actuator includes a button coupled to the plunger and operable to selectively move the plunger away from the valve seat.

Clause 32. The paint sprayer of any of the preceding clauses, wherein the override actuator further includes a spring that biases the button toward an unactuated position.

Clause 33. The paint sprayer of any of the preceding clauses, wherein the override actuator further includes a follower attached to the plunger, and wherein the button includes a cam portion configured to engage the follower to move the plunger.

Clause 34. A paint spray system comprising: a paint sprayer configured to spray a spray liquid, the paint sprayer including a pump assembly, a spray tip, and a sprayer transfer coupler fluidly coupled to the pump assembly; a transfer hose including a hose segment and a hose transfer coupler, the hose segment having a first end coupled to the hose transfer coupler and a second end configured to fluidly communicate with a source of the spray liquid, the hose transfer coupler being configured to selectively and removably couple to the sprayer transfer coupler to establish a fluid connection between the pump assembly and the hose segment; and a base including a base wall and a first support portion coupled to the base wall and defining a first receptacle configured to removably receive the paint sprayer.

Clause 35. The paint spray system of any of the preceding clauses, wherein the base further includes a container configured to receive the spray tip in response to the paint sprayer being received into the first receptacle.

Clause 36. The paint spray system of any of the preceding clauses, wherein the source comprises a first paint can, and wherein the base further defines a second receptacle configured to removably receive the first paint can.

Clause 37. The paint spray system of any of the preceding clauses, wherein the base further defines a third receptacle configured to removably receive a second paint can having a smaller volume than the first paint can.

Clause 38. The paint spray system of any of the preceding clauses, wherein the transfer hose further comprises a priming mechanism configured to direct the spray liquid into the pump assembly via the sprayer transfer coupler.

Clause 39. The paint spray system of any of the preceding clauses, wherein the priming mechanism comprises a syringe.

Clause 40. The paint spray system of any of the preceding clauses, wherein the second end of the transfer hose is coupled to a filter assembly.

Clause 41. A method of priming a paint sprayer of a paint spray system, the paint spray system including a transfer hose and a container containing a spray liquid, the transfer hose having a primary hose segment, a hose transfer connector, and a priming mechanism having a priming chamber, the method comprising: connecting the hose transfer connector to the paint sprayer; drawing the spray liquid from the container into the priming chamber of the priming mechanism; and forcing the spray liquid out of the priming chamber and into the paint sprayer.

Clause 42. The method of any of the preceding clauses, further comprising setting the paint sprayer in a load mode.

Clause 43. The method of any of the preceding clauses, further comprising blocking the primary hose segment of the transfer hose.

Clause 44. The method of any of the preceding clauses, further comprising placing an end of the primary hose segment in the container.

## Claims

1. A paint sprayer comprising:
a housing enclosing an internal space;
a nozzle assembly coupled to the housing;
a pump assembly fluidly coupled to the nozzle assembly and positioned within a first region of the internal space; and
a reservoir fluidly coupled to the pump assembly and configured to hold a spray liquid, the reservoir being positioned within a second region of the internal space.

2. The paint sprayer of claim 1, wherein the housing comprises a first clamshell member and a second clamshell member, and wherein the second region of the internal space is at least partially defined between the first and second clamshell members.

3. The paint sprayer of claim 2, wherein the housing further comprises a cover member coupled to the first and second clamshell members, and wherein the cover member partially defines the second region of the internal space.

4. The paint sprayer of claim 3, wherein the second region is entirely enclosed by the first clamshell member, the second clamshell member, and the cover member.

5. The paint sprayer of claim 1, wherein the reservoir is collapsible such that a first internal volume of the reservoir in a filled state is greater than a second internal volume of the reservoir in an empty state.

6. The paint sprayer of claim 1, wherein the housing includes a divider wall that separates the first region from the second region.

7. The paint sprayer of claim 1, further comprising a transfer coupler configured to couple to an external source of the spray liquid and to supply the spray liquid to the reservoir via the pump assembly.

8. The paint sprayer of claim 1, wherein the reservoir is selectively removable from the internal space.

9. The paint sprayer of claim 8, further comprising:
an electronic controller configured to control operation of the pump assembly; and
a sensor electrically connected to the electronic controller and configured to detect the reservoir within the internal space;
wherein the electronic controller disables the pump assembly in response to a signal from the sensor indicating that the reservoir is not within the internal space.

10. A paint sprayer comprising:
a housing;
a nozzle assembly coupled to the housing;
a pump assembly positioned within the housing and fluidly coupled to the nozzle assembly; and
a collapsible reservoir fluidly coupled to the pump assembly and configured to hold a spray liquid, the collapsible reservoir including a flexible sidewall and defining a variable internal volume;
wherein the collapsible reservoir is movable between a filled state and a partially emptied state, wherein the collapsible reservoir defines a first internal volume in response to being in the filled state and defines a second internal volume in response to being in the partially emptied state, and wherein the second internal volume is less than fifty percent of the first internal volume.

11. The paint sprayer of claim 10, wherein the housing encloses an internal space, wherein the pump assembly is positioned within a first region of the internal space, and wherein the collapsible reservoir is positioned within a second region of the internal space.

12. A paint sprayer comprising:
a housing;
a nozzle assembly coupled to the housing;
a pump assembly positioned within the housing and fluidly coupled to the nozzle assembly; and
a collapsible reservoir fluidly coupled to the pump assembly and configured to hold a spray liquid, the collapsible reservoir including a flexible bag and a rigid coupler affixed to the flexible bag.

13. A paint sprayer comprising:
a housing;
a nozzle assembly coupled to the housing;
a pump assembly positioned within the housing and fluidly coupled to the nozzle assembly;
a reservoir fluidly coupled to the pump assembly and configured to hold a spray liquid; and
a transfer coupler fluidly coupled to the pump assembly and configured to selectively connect to an external source of the spray liquid;
wherein the pump assembly is operable in a first mode to draw the spray liquid from the external source via the transfer coupler and fill the reservoir.

14. A paint sprayer comprising:
a housing;
a pump assembly positioned within the housing; and
a nozzle assembly fluidly coupled to the pump assembly, the nozzle assembly including
a spray tip defining an outlet orifice,
a valve assembly positioned upstream from the outlet orifice and downstream from the pump assembly and biased toward a closed position, and
an override actuator coupled to the valve assembly;
wherein the valve assembly is configured to open in response to a fluid pressure developed by the pump assembly exceeding a threshold pressure; and
wherein the override actuator is operable to open the valve assembly irrespective of the fluid pressure.

15. A paint spray system comprising:
a paint sprayer configured to spray a spray liquid, the paint sprayer including a pump assembly, a spray tip, and a sprayer transfer coupler fluidly coupled to the pump assembly;
a transfer hose including a hose segment and a hose transfer coupler, the hose segment having a first end coupled to the hose transfer coupler and a second end configured to fluidly communicate with a source of the spray liquid, the hose transfer coupler being configured to selectively and removably couple to the sprayer transfer coupler to establish a fluid connection between the pump assembly and the hose segment; and
a base including a base wall and a first support portion coupled to the base wall and defining a first receptacle configured to removably receive the paint sprayer.
